# EUROPEAN PATENT SPECIFICATION

(11) **EP 2 922 013 B1**
(45) Date of publication and mention of the grant of the patent: **06.07.2016**
(21) Application number: 15159470.2
(22) Date of filing: 17.03.2015
(51) Int. Cl.: G06Q 40/00, H04L 29/06, G06Q 20/32

(54) **A TELECOMMUNICATION METHOD FOR SECURELY ACCESSING USER DATA**
KOMMUNIKATIONSVERFAHREN FÜR SICHEREN ZUGRIFF AUF BENUTZERDATEN
PROCÉDÉ DE TÉLÉCOMMUNICATION POUR UN ACCÈS SÉCURISÉ À DES DONNÉES D'UTILISATEUR

(30) Priority: 18.03.2014 US 201414218268
(43) Date of publication of application: 23.09.2015
(73) Proprietor: SAP SE, 69190 Walldorf (DE)
(72) Inventor: Lehnert, Bernd, 69190 Walldorf (DE); Michaud, Mark, 69190 Walldorf (DE); Grenier, Yan, 69190 Walldorf (DE)
(74) Representative: Richardt Patentanwälte PartG mbB

(56) References cited:
- US-A1- 2014 040 052

## Description

### TECHNICAL FIELD

The present application relates generally to the technical field of telecommunication, and, in various example embodiments, to methods and systems of providing secure access to user data in a telecommunication system.

### BACKGROUND

Currently, users of mobile telecommunication devices are provided with service data history across different electronic devices. However, if users want to find information about a previous service requests, they have to look through files for previously-saved responses, scan e-mails for acknowledgement messages, or even contact a service provider to see if they can find specific service request details.

US 2014/0040052 A1 discloses methods for utilizing mobile electronic devices in various types of financial transactions.

### SUMMARY

Various embodiments provide a telecommunication method for securely accessing user data, a telecommunication system, a backend server, a mobile telecommunication device, an electronic device and a computer program product as described by the subject matter of the independent claims. Advantageous embodiments are described in the dependent claims.

In one aspect, the invention relates to a telecommunication method for securely accessing user data in a telecommunication system, the telecommunication system comprising a mobile telecommunications device; the mobile telecommunication device comprising a processor and memory; wherein the memory stores a plurality of mobile applications that are executable by the processor; each mobile application of the plurality of mobile applications comprising instructions that when executed cause the processor to connect to a respective electronic device of the telecommunication system for requesting a service to the electronic device, wherein the electronic device is adapted to send a response to the service request using a at least first user identification address assigned to a user of the mobile application, the electronic device comprising one of a terminal, server and automated vending machine. The method comprises:
- providing a backend server of the telecommunication system, wherein the backend server is connected to the mobile telecommunication device via a first cellular digital telecommunication network, the backend server being connected to the plurality of electronic devices via at least a second network;
- assigning to the backend server at least a second identification address, wherein the second identification address defines a network connection of the second network to the backend server, wherein the network connection is a trusted network connection;
- for each mobile application of the plurality of mobile applications
   o receiving by the mobile telecommunication device from the user the service request;
   o establishing a communication channel via a third network to the electronic device (that corresponds to the mobile application) for forwarding the service request by the mobile telecommunication device to the electronic device;
   o processing the service request by the electronic device;
   o redirecting to the backend server a response to the service request by using the second identification address instead of the first user identification address by the electronic device;
- storing response data comprising the received responses in association with a user ID of the user by the backend server;
- generating a web service for providing the response data via an URL by the backend server;
- providing a demilitarized zone, DMZ, interface between the backend server and the mobile telecommunication device;
- placing the web service in the DMZ interface;
- receiving from the mobile telecommunication device a data access request to access at least part of the response data by the backend server, wherein the data access request is indicative of the user ID;
- authenticating the mobile telecommunication device using at least the user ID;
- sending the URL to the mobile telecommunication device by the backend server in case of a successful authentication of the mobile telecommunication device;
- accessing the web service at the URL for requesting the at least part of the response data from the backend server by the mobile telecommunication device;
- receiving the data access request of the at least part of the response data via the DMZ interface by the backend server;
- sending result data indicative of the at least part of the response data to the mobile telecommunication device by the backend server in response to the data access request of the at least part of response data by the mobile telecommunication device.

The mobile telecommunication device may comprise for example, but not limited to a mobile telephone, a smart phone, or a tablet.

The above features may have the advantage of providing a secure and optimal access to user data collected from different electronic devices. These features may have another advantage of saving resources in the telecommunication system. For example, storing the data centrally may reduce the data traffic in the telecommunication system compared to a case where the user data are not centrally stored.

For example, resources may be saved in the mobile telecommunication device as the access to the user data requires a single destination address instead of multiple user identification address. In addition, the user data are not locally stored which may save storage space in the mobile telecommunication device.

For example, the access to the response data may be a real-time access in that as soon as the responses are sent from the electronic devices to the backend server they are delivered immediately e.g. upon requests from the mobile telecommunication device by the backend server. For example, the user may order an item from an automated vending machine and immediately after that, the user may have access to the information related to the order as provided by the backend server.

According to one embodiment, the web service becomes inoperative after a predetermined duration. This embodiment may enhance the secure aspect of the present method. In this example, the mobile telecommunication device is able to retrieve the response data only for the predetermined duration. After this, the URL becomes inoperative and the mobile telecommunication device can no longer retrieve the data. This may provide more security that the response data will not be stolen.

According to one embodiment, redirecting the response to the service request comprises: generating a cryptographic key pair by the electronic device, wherein the cryptographic key pair comprises a public encryption key and a private decryption key; encrypting the response to the service request using the public encryption key into first encrypted data by the electronic device; sending the first encrypted data as the response to the service request; sending the public encryption key and the private decryption key to the backend server. For example, each of the electronic devices may generate the cryptographic key pair using a respective cryptographic process. This may provide the trusted network connection.

For example, the telecommunication system may comprise trusted components such that a party or component of the telecommunication system may provide the cryptographic key pair to other components of the telecommunication system (e.g. the backend server may be the owner of the cryptographic key pair although it was generated by the electronic device). This may be advantageous as the security strength supported by each electronic device may be provided based on the secrecy of the information provided by the electronic device.

According to one embodiment, the method further comprises sending a given private decryption key of the plurality of private decryption keys to the mobile telecommunication device by the electronic device, wherein the data access request received by the backend server from the mobile telecommunication device further indicates a signature generated by the mobile telecommunication device using the given private decryption key; using the received signature for authenticating the mobile telecommunication device by the backend server.

This may increase the secure aspect of the present method in that an authentication based on two input values is more secure than an authentication based on a single input value.

According to one embodiment, the method further comprises deleting the plurality of responses and the plurality of cryptographic key pairs by the plurality of electronic devices. This may free up the storage space in the electron devices. Further, this may prevent malicious attack to data stored in the electronic devices.

According to one embodiment, the third network comprises a near field communication, NFC, network, wherein each of the mobile telecommunication and the plurality of electronic devices is an NFC-enabled device. NFC may have the strongest point (e.g., secure communication distance of 10 cm) to prevent the third party from attacking privacy.

According to one embodiment, the mobile telecommunication device is a battery powered device. The sending of the result data comprises: processing the response data using the data access request for generating the result data, wherein the result data comprises at least one of: data received from electronic devices having a geographical location that matches the position of the mobile telecommunication device; data being received within a predefined time interval; data received from electronic devices being trusted systems. A trusted system is a system that supports Trusted Computer Group (TCG) security specifications.

This embodiment may have the advantage of reducing the amount of data to be transmitted and thus may reduce the data traffic in the telecommunication system. This may reduce intrusion risk compared to a higher data traffic. Further, this embodiment may save energy and disk space on the mobile telecommunication device.

According to one embodiment, the response to the service request further indicates the geographical location of the electronic device. This for example, may prevent computing the location at the mobile telecommunication device and thus may save resources in the mobile telecommunication device.

According to one embodiment, the trusted network connection comprises a secure HyperText Transfer Protocol (HTTP) connection.

According to one embodiment, the web service is provided as a service in a cloud computing environment comprising the backend server and the plurality of electronic devices as components of a distributed computing system of the cloud computing environment.

In another aspect, the invention relates to a computer program product computer program product comprising computer executable instructions to perform the method steps of the method of the preceding embodiments.

In another aspect, the invention relates to a telecommunication system comprising a mobile telecommunications device; the mobile telecommunication device comprising a processor and memory; wherein the memory stores a plurality of mobile applications that are executable by the processor; each mobile application of the plurality of mobile applications comprising instructions that when executed cause the processor to connect to a respective electronic device of the telecommunication system for requesting a service to the electronic device, wherein the electronic device is adapted to send a response to the service request using a first user identification address assigned to a user of the mobile application, the electronic device comprising one of a terminal, server and automated vending machine; wherein the telecommunication system is operable to execute the method as disclosed in one of the preceding embodiments.

In another aspect, the invention relates to a mobile telecommunication device of the telecommunication system according to the preceding embodiment.

In another aspect, the invention relates to a backend server of the telecommunication system according to the preceding embodiment.

In another aspect, the invention relates to an electronic device of the telecommunication system according to the preceding embodiment.

In another aspect, the invention relates to a computer-implemented method comprising: receiving, by a back-end system, purchase information comprising information of purchases made by a consumer (e.g. a user) via a plurality of retail channels; storing the received purchase information of the consumer on the back-end system; receiving, from the consumer on a computing device, a request to access the stored purchase information, the request comprising an identification of a virtual host and an identification of a service to invoke on the back-end system to retrieve the purchase information stored on the back-end system; determining, by a machine having a memory and at least one processor, an identification of an internal host based on the identification of the virtual host, the identification of the internal host identifying the back-end system; and retrieving the purchase information using the identification of the internal host and the identification of the service; and providing the retrieved purchase information to the consumer on the computing device.

According to one embodiment, the plurality of retail channels comprises an online retail channel.

According to one embodiment, the back-end system is dedicated to a single retail entity having a central management, the single retail entity having transacted the purchases made by the consumer.

According to one embodiment, the single retail entity comprises a plurality of chain stores.

According to one embodiment, the back-end system is part of a private network of the single retail entity, and the back-end system is used by the single retail entity to manage purchase transactions and product inventory.

According to one embodiment, the purchase information is made available for retrieval and presentation to the consumer on the computing device in real-time or near real-time with respect to the purchase information being stored on the back-end system.

According to one embodiment, the purchase information is received by the back-end system in real-time or near real-time with respect to completion of the corresponding purchases.

According to one embodiment, the identification of the service comprises an identification of an Open Data Protocol (OData) service on the back-end system.

According to one embodiment, the identification of the service comprises an OData Uniform Resource Locator (URL), and the purchase information is retrieved using a concatenation of the OData URL with the identification of the internal host.

In another aspect, the invention relates to a system comprising: a machine having a memory and at least one processor; and a back-end system configured to: receive purchase information comprising information of purchases made by a consumer via a plurality of retail channels; and store the received purchase information of the consumer on the back-end system; and a cloud connector on the machine configured to: receive, from the consumer on a computing device, a request to access the stored purchase information, the request comprising an identification of a virtual host and an identification of a service to invoke on the back-end system to retrieve the purchase information stored on the back-end system; determine an identification of an internal host based on the identification of the virtual host, the identification of the internal host identifying the back-end system; and retrieve the purchase information from the back-end system using the identification of the internal host and the identification of the service.

In another aspect, the invention relates to a non-transitory machine-readable storage medium, tangibly embodying a set of instructions that, when executed by at least one processor, causes the at least one processor to perform a set of operations comprising: receiving, by a back-end system, purchase information comprising information of purchases made by a consumer via a plurality of retail channels; storing the received purchase information of the consumer on the back-end system; receiving, from the consumer on a computing device, a request to access the stored purchase information, the request comprising an identification of a virtual host and an identification of a service to invoke on the back-end system to retrieve the purchase information stored on the back-end system; determining an identification of an internal host based on the identification of the virtual host, the identification of the internal host identifying the back-end system; and retrieving the purchase information using the identification of the internal host and the identification of the service; and providing the retrieved purchase information to the consumer on the computing device.

### BRIEF DESCRIPTION OF THE DRAWINGS

Some embodiments of the present disclosure are illustrated by way of example and not limitation in the figures of the accompanying drawings, in which like reference numbers indicate similar elements, and in which:
FIG. 1 is a network diagram illustrating a client-server system, in accordance with some example embodiments;
FIG. 2 is a block diagram illustrating enterprise applications and services in an enterprise application platform, in accordance with some example embodiments;
FIG. 3 is a block diagram illustrating an omni-channel purchase history system, in accordance with some example embodiments;
FIG. 4 is a process flow diagram illustrating data flow operations, in accordance with some example embodiments;
FIG. 5 is a flowchart illustrating a method, in accordance with some example embodiments;
FIG. 6 is a flowchart illustrating a method, in accordance with some example embodiments;
FIG. 7 is a flowchart illustrating a method, in accordance with some example embodiments;
FIG. 8 is a block diagram illustrating a mobile device, in accordance with some example embodiments;
FIG. 9 is a block diagram of an example computer system on which methodologies described herein can be executed, in accordance with some example embodiments;
FIG. 10 is a representative view of a telecommunication system; and
FIG. 11 is a flowchart of a method for securing access to data in the telecommunication system.

### DETAILED DESCRIPTION

Example methods and systems providing real-time availability of omni-channel sales data are described. In the following description, for purposes of explanation, numerous specific details are set forth in order to provide a thorough understanding of example embodiments. It will be evident, however, to one skilled in the art that the present embodiments can be practiced without these specific details.

The present disclosure introduces an application that can be deployed on the cloud. The application can allow a consumer to retrieve, in real-time or near real-time, his or her purchase history using any device (e.g., a desktop computer, a laptop computer, a tablet computer, a smartphone). The purchase history can include an omni-channel history of purchases made by the consumer. Omni-channel refers to all available channels (e.g., online). The omni-channel history of purchases can comprise any purchases made via any of the available online channels, including, but not limited to, online web services. The details about the purchases made by the consumer via all of the available online channels can be consolidated and made available to the consumer via a single cloud-based application, thereby enabling the consumer to access, using a single application, details about all of the purchases for one or more specified service providers, regardless of what online channel (e.g. web site) was used to make the purchases. The purchase information can be made available in real-time or near real-time as the corresponding purchases are completed and/or as a back-end system of the corresponding service provider is updated based on the corresponding purchases, where the back-end system is used to manage purchase transactions and product inventory for the retail entity. A reverse proxy employing a mapping of an identification of a virtual host to an identification of an internal host can be used to enable access to the purchase information on the back-end system, while hiding the details of the back-end system from a malicious trace.

In some example embodiments, purchase information comprising information of purchases made by a consumer via a plurality of retail channels can be received by a back-end system. The received purchase information of the consumer can be stored on the back-end system. A request to access the stored purchase information can be received from the consumer on a computing device. The request can comprise an identification of a virtual host and an identification of a service to invoke on the back-end system to retrieve the purchase information stored on the back-end system. An identification of an internal host can be determined based on the identification of the virtual host, the identification of the internal host identifying the back-end system. The purchase information can be retrieved using the identification of the internal host and the identification of the service. The retrieved purchase information can be provided to the consumer on the computing device. In some example embodiments, the plurality of online channels comprises at least an online retail channel.

In some example embodiments, the back-end system is dedicated to a single service provider having a central management, the single service provider having transacted the purchases made by the consumer. In some example embodiments, the single service provider comprises a plurality of online chain stores. In some example embodiments, the back-end system is part of a private network of the single retail entity, and the back-end system is used by the single service provider to manage purchase transactions and product inventory. In some example embodiments, the purchase information is made available for retrieval and presentation to the consumer on the computing device in real-time or near real-time with respect to the purchase information being stored on the back-end system. In some example embodiments, the purchase information is received by the back-end system in real-time or near real-time with respect to completion of the corresponding purchases.

In some example embodiments, the identification of the service comprises an identification of an Open Data Protocol (OData) service on the back-end system. In some example embodiments, the identification of the service comprises an OData Uniform Resource Locator (URL), and the purchase information is retrieved using a concatenation of the OData URL with the identification of the internal host.

In some example embodiments, purchase information of a consumer is stored. The purchase information can comprise information of purchases made by the consumer via a plurality of online channels. The consumer can be enabled to access the purchase information via a computing device.

In some example embodiments, the plurality of online channels comprises at least an online retail channel. In some embodiments, the purchase information is made accessible to the user on the computing device in near real-time with respect to the purchases being transacted. In some embodiments, the purchases are made across multiple service providers.

In some example embodiments, enabling the user to access the purchase information comprises receiving, from the consumer on the computing device, a request to access the purchase information, retrieving the purchase information based on the request, and causing the retrieved purchase information to be displayed on the computing device.

In some example embodiments, the purchase information is retrieved using a reverse proxy. In some embodiments, the reverse proxy receives the request. The request can comprise an identification of a virtual host and an identification of a service to invoke on a back-end system to retrieve the purchase information stored on the back-end system. The back-end system can be associated with a service provider corresponding to the purchase information. The reverse proxy can determine an identification of an internal host. The identification of the internal host can identify the back-end system. The reverse proxy can retrieve the purchase information using the identification of the internal host and the identification of the service. In some embodiments, the identification of the service comprises an identification of an Open Data Protocol (OData) service on the back-end system. In some embodiments, the identification of the service comprises an OData Uniform Resource Locator (URL) path, and the reverse proxy retrieves the purchase information using a concatenation of the OData URL with the identification of the internal host.

The methods or embodiments disclosed herein can be implemented as a computer system having one or more modules (e.g., hardware modules or software modules). Such modules can be executed by one or more processors of the computer system. In some embodiments, a non-transitory machine-readable storage device can store a set of instructions that, when executed by at least one processor, causes the at least one processor to perform the operations and method steps discussed within the present disclosure.

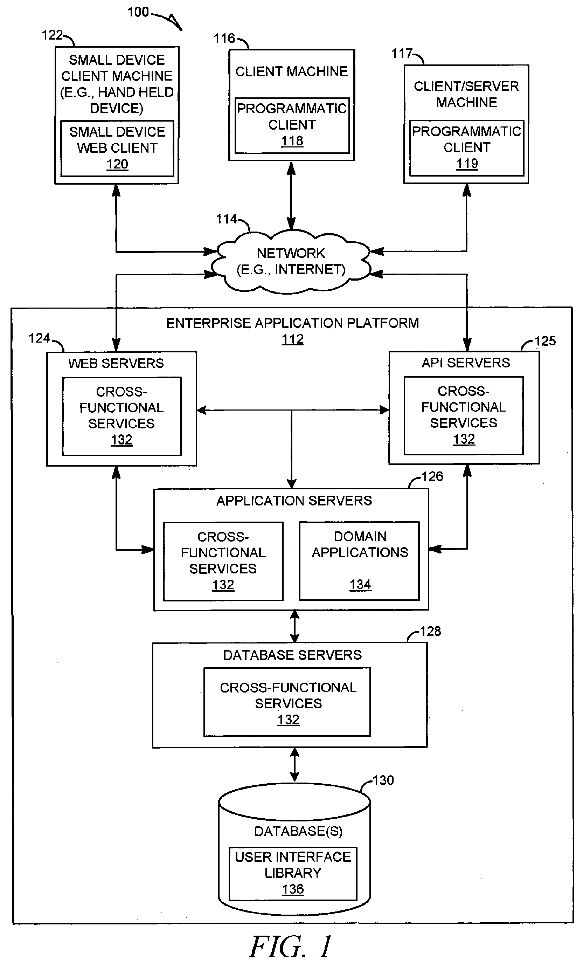

FIG. 1 is a network diagram illustrating a client-server system, in accordance with an example embodiment. A platform (e.g., machines and software), in the example form of an enterprise application platform 112, provides server-side functionality, via a network 114 (e.g., the Internet) to one or more clients. FIG. 1 illustrates, for example, a client machine 116 with programmatic client 118 (e.g., a browser, such as the INTERNET EXPLORER browser developed by Microsoft Corporation of Redmond, Washington State), a small device client machine 122 with a small device web client 120 (e.g., a browser without a script engine), and a client/server machine 117 with a programmatic client 119.

Turning specifically to the example enterprise application platform 112, web servers 124 and Application Program Interface (API) servers 125 can be coupled to, and provide web and programmatic interfaces to, application servers 126. The application servers 126 can be, in turn, coupled to one or more database servers 128 that facilitate access to one or more databases 130. The web servers 124, Application Program Interface (API) servers 125, application servers 126, and database servers 128 can host cross-functional services 132. The application servers 126 can further host domain applications 134.

The cross-functional services 132 provide services to users and processes that utilize the enterprise application platform 112. For instance, the cross-functional services 132 can provide portal services (e.g., web services), database services and connectivity to the domain applications 134 for users that operate the client machine 116, the client/server machine 117 and the small device client machine 122. In addition, the cross-functional services 132 can provide an environment for delivering enhancements to existing applications and for integrating third-party and legacy applications with existing cross-functional services 132 and domain applications 134. Further, while the system 100 shown in FIG. 1 employs a client-server architecture, the embodiments of the present disclosure are of course not limited to such an architecture, and could equally well find application in a distributed, or peer-to-peer, architecture system.

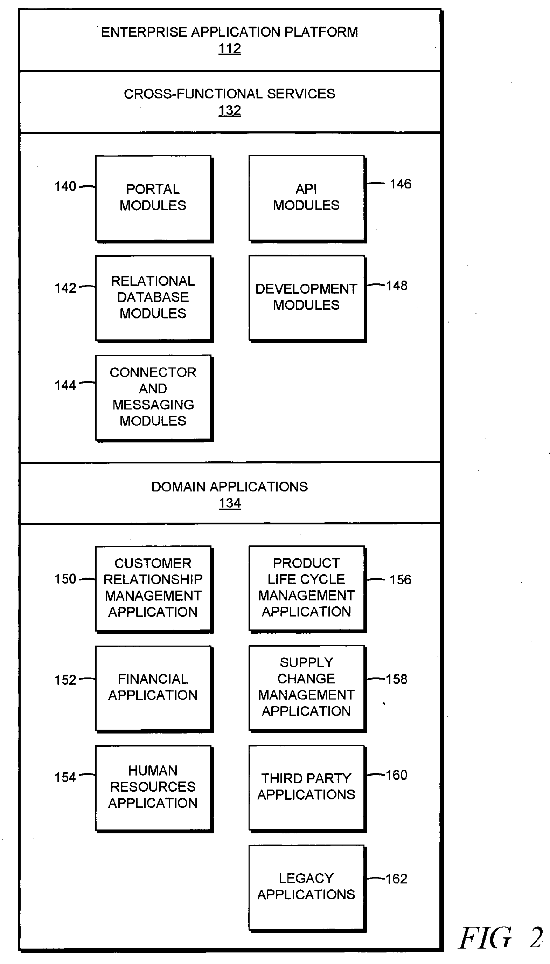

FIG. 2 is a block diagram illustrating enterprise applications and services in an enterprise application platform 112, in accordance with an example embodiment. The enterprise application platform 112 can include cross-functional services 132 and domain applications 134. The cross-functional services 132 can include portal modules 140, relational database modules 142, connector and messaging modules 144, Application Program Interface (API) modules 146, and development modules 148.

The portal modules 140 can enable a single point of access to other cross-functional services 132 and domain applications 134 for the client machine 116, the small device client machine 122, and the client/server machine 117. The portal modules 140 can be utilized to process, author and maintain web pages that present content (e.g., user interface elements and navigational controls) to the user. In addition, the portal modules 140 can enable user roles, a construct that associates a role with a specialized environment that is utilized by a user to execute tasks, utilize services and exchange information with other users and within a defined scope. For example, the role can determine the content that is available to the user and the activities that the user can perform. The portal modules 140 include a generation module, a communication module, a receiving module and a regenerating module. In addition the portal modules 140 can comply with web services standards and/or utilize a variety of Internet technologies including Java, J2EE, SAP's Advanced Business Application Programming Language (ABAP) and Web Dynpro, XML, JCA, JAAS, X.509, LDAP, WSDL, WSRR, SOAP, UDDI and Microsoft .NET.

The relational database modules 142 can provide support services for access to the database(s) 130, which includes a user interface library 136. The relational database modules 142 can provide support for object relational mapping, database independence and distributed computing. The relational database modules 142 can be utilized to add, delete, update and manage database elements. In addition, the relational database modules 142 can comply with database standards and/or utilize a variety of database technologies including SQL, SQLDBC, Oracle, MySQL, Unicode, JDBC.

The connector and messaging modules 144 can enable communication across different types of messaging systems that are utilized by the cross-functional services 132 and the domain applications 134 by providing a common messaging application processing interface. The connector and messaging modules 144 can enable asynchronous communication on the enterprise application platform 112.

The Application Program interface (API) modules 146 can enable the development of service-based applications by exposing an interface to existing and new applications as services. Repositories can be included in the platform as a central place to find available services when building applications.

The development modules 148 can provide a development environment for the addition, integration, updating and extension of software components on the enterprise application platform 112 without impacting existing cross-functional services 132 and domain applications 134.

Turning to the domain applications 134, the customer relationship management application 150 can enable access to and can facilitate collecting and storing of relevant personalized information from multiple data sources and business processes. Enterprise personnel that are tasked with developing a buyer into a long-term customer can utilize the customer relationship management applications 150 to provide assistance to the buyer throughout a customer engagement cycle.

Enterprise personnel can utilize the financial applications 152 and business processes to track and control financial transactions within the enterprise application platform 112. The financial applications 152 can facilitate the execution of operational, analytical and collaborative tasks that are associated with financial management. Specifically, the financial applications 152 can enable the performance of tasks related to financial accountability, planning, forecasting, and managing the cost of finance.

The human resource applications 154 can be utilized by enterprise personnel and business processes to manage, deploy, and track enterprise personnel. Specifically, the human resource applications 154 can enable the analysis of human resource issues and facilitate human resource decisions based on real time information.

The product life cycle management applications 156 can enable the management of a product throughout the life cycle of the product. For example, the product life cycle management applications 156 can enable collaborative engineering, custom product development, project management, asset management and quality management among business partners.

The supply chain management applications 158 can enable monitoring of performances that are observed in supply chains. The supply chain management applications 158 can facilitate adherence to production plans and on-time delivery of products and services.

The third-party applications 160, as well as legacy applications 162, can be integrated with domain applications 134 and utilize cross-functional services 132 on the enterprise application platform 112.

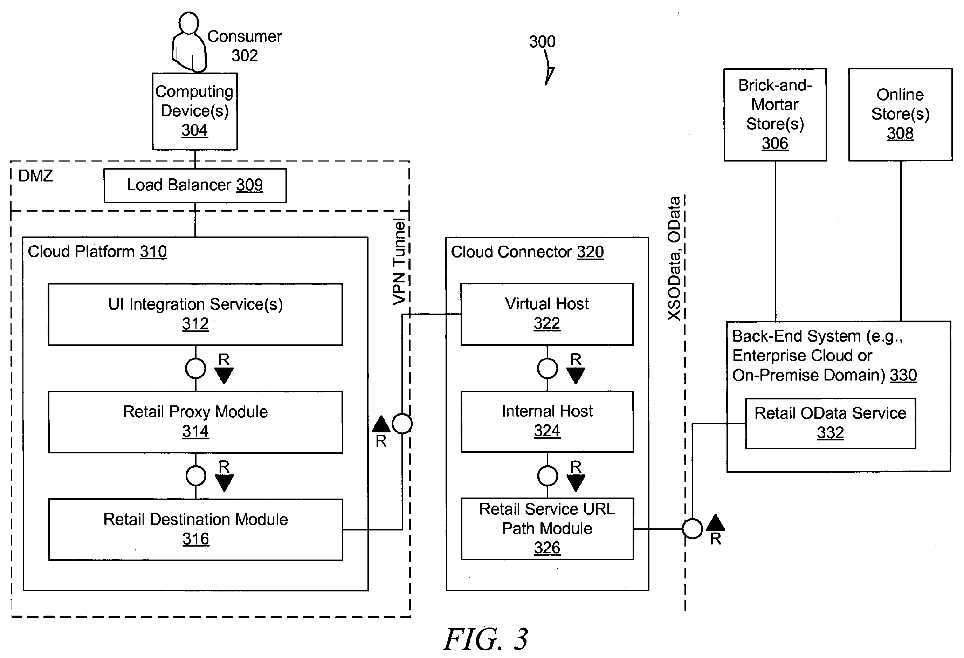

FIG. 3 is a block diagram illustrating an omni-channel purchase history system 300, in accordance with an example embodiment. In some embodiments, the omni-channel purchase history system 300 can comprise any combination of one or more of a cloud platform 310, a cloud connector 320, and a back-end system 330 (e.g., an enterprise cloud or an on-premise domain), which can reside on one or more machines, each having a memory and at least one processor (not shown). In some embodiments, any combination of one or more of the components of omni-channel purchase history system 300 can be incorporated into the enterprise application platform 112 in FIG. 1 (e.g., on application server(s) 126). However, it is contemplated that other configurations are also within the scope of the present disclosure. However, it is contemplated that other configurations are also within the scope of the present disclosure.

Any of the communication described herein between any of the systems, devices, modules, in-store retail channels (e.g., in-store point-of-sale terminals) or online retail channels (e.g., websites, mobile applications) can be achieved via one or more networks. The network(s) can include any network that enables communication between or among machines, databases, and devices. Accordingly, the network(s) can include a wired network, a wireless network (e.g., a mobile or cellular network), or any suitable combination thereof. The network(s) can include one or more portions that constitute a private network, a public network (e.g., the Internet), or any suitable combination thereof. Other configurations are also within the scope of the present disclosure.

Omni-channel purchase history system 300 can be used by a consumer 302 to access purchase information comprising details of purchases made by the consumer 302 via a plurality of retail channels. The consumer 302 can access this information using any computing device at any time. The plurality of retail channels can comprise all of the available retail channels for one or more service providers. In some embodiments, the retail channels comprise brick-and-mortar stores (that refer to in-store terminals) 306 and online stores 308. Retail channels within the brick-and-mortar stores 306 can include a variety of in-store point-of-sale terminals, including, but not limited to, in-store cashier terminals. Retail channels within the online stores 308 can include, but are not limited to, websites and mobile applications.

In some embodiments, as the consumer 302 makes purchases (e.g., performs transactions) using any of the available retail channels, information about those purchases is sent from the point of sale of the corresponding retail channel to a central repository (e.g., one or more in-memory databases, such as database(s) 130 in FIG. 1). The central repository can have the ability to expose this information in a particular way to consuming applications. In some embodiments, in response to (or otherwise subsequent to) a purchase being made by the consumer 302 via any of the available retail channels (e.g., at one of the retail channels within (online) brick-and-mortar store(s) 306 and/or online store(s) 308), details of the purchase can be transmitted to the back-end system 330, where the details of the purchase can be stored. In some embodiments, the purchase information is provided by the point of sale to the back-end system 330 in either real-time or near real-time with respect to the purchases being transacted. For example, in response to the consumer 302 purchasing a product at a point of sale in an online brick-and-mortar store 306, the details of the purchase can immediately be sent to the back-end system 300, where they can be accessed by the consumer 302.

In some example embodiments, the back-end system 330 is dedicated to a single retail entity having a central management. The single retail entity can have transacted the purchases made by the consumer 302. In some example embodiments, the single retail entity comprises a plurality of chain stores (e.g., Target® stores). In some example embodiments, the back-end system 330 is part of a private network of the single retail entity, and the back-end system 330 is used by the single retail entity to manage purchase transactions and product inventory. In some example embodiments, the back-end system 330 can include enterprise resource planning (ERP) software used by the single retail entity to store and manage data from different stages of its business. These stages can include any combination of one or more of marketing and sales, inventory management, and payment and shipping. The back-end system 330 can be integrated into core business process of the single retail entity.

The back-end system 330 can be used by the single retail entity to track business resources (e.g., cash, raw materials, production capacity) and the status of business commitments (e.g., orders, purchase orders, and payroll). The back-end system can share data across the various departments of the single retail entity (e.g., manufacturing, purchasing, sales, and accounting).

In some example embodiments, the purchase information is made available for retrieval and presentation to the consumer on the computing device in real-time or near real-time with respect to the purchase information being stored on the back-end system 330. In some example embodiments, the purchase information is received by the back-end system 330 in real-time or near real-time with respect to completion of the corresponding purchases.

In some embodiments, the back-end system 330 can be dedicated to a single service provider in order to handle all the omni-channel purchase information for the single service provider. For example, in some embodiments, the back-end system 330 is configured to store all of the purchase information (e.g., all sales transactions) from all available retail channels only for a single service provider. In other embodiments, the back-end system 330 can be dedicated to multiple service providers to handle all the omni-channel purchase information across the multiple service providers. The purchase information can be in the form of a transaction log (TLOG) or a sale order. A TLOG can comprise a history of actions executed by a database management system. The purchase information can comprise sales transactions contained at the most granular level (e.g., products purchased, dates and/or times of purchases, locations of purchases, channels of purchases, promotions used or otherwise associated with purchases).

The purchase information stored in the back-end system 330 can be associated with loyalty information. The loyalty information can be used to identify the consumer who completed the transaction. The loyalty information can be captured at the point of sale. In some embodiments, the point of sale comprises the device that captures the sale, which can include, but is not limited to, a kiosk, a website, or a point of sale terminal.

Consumers can register on a web site that is hosted on the cloud platform 310. This web site can allow the consumer to view his purchase history. The web site registration can be linked to the loyalty program of the corresponding service provider. In some embodiments, the cloud platform enables only registered members to access the purchase information. Members can be consumers who have registered with the corresponding service provider via a loyalty program and have registered on the cloud platform. Registered consumers can be issued and provided with a password for using the services of the cloud platform disclosed herein. In some embodiments, the password can be generated on the cloud platform. In some embodiments, the consumer can dictate the password (e.g., enter a consumer-created password in a text field) during a registration process.

The consumer 302 can access the cloud platform 310 via the public Internet (or some other network connection) using one or more computing devices 304. In some embodiments, computing device(s) 304 can include, but is not limited to, a desktop computer, a laptop computer, a tablet computer, and a smartphone. Other types of computing devices 304 are also within the scope of the present disclosure. In some embodiments, the consumer 302 on the computing device 304 can access the cloud platform 310 through a demilitarized zone (DMZ). A DMZ is a computer or small subnetwork that sits between a trusted internal network, such as a corporate private LAN, and an untrusted external network, such as the public Internet. In some embodiments, the computing device 304 can access the cloud platform 310 through a load balancer 309 that resides inside the DMZ. In some embodiments, the back-end system 330 does not reside within a DMZ. In some embodiments, the cloud platform 310 does not reside within a DMZ. In some embodiments, the cloud platform 310 is implemented on a server residing outside of a firewall of the back-end system 330. The cloud platform 310 can be implemented as a multi-tenant Platform-as-a-Service (PaaS). The cloud platform 310 can be separated from the cloud connector 320 by a virtual private network (VPN) tunnel.

The consumer 302 can use one or more user interface (UI) integration services 312 on the cloud platform 310 to request (e.g., submit a query for) purchase information corresponding to purchases made by the consumer 302. In some embodiments, the UI integration service(s) 312 is based on a combination of HTML5, Cascading Style Sheets (CSS), and JavaScript, and is built on one or more libraries, such as jQuery. In some embodiments, the UI integration service(s) 312 comprises a UI development toolkit for HTML5 (e.g., SAPUI5). A user interface layer of the UI integration service(s) 312 can request data (e.g., purchase information) from a retail proxy module 314.

The retail proxy module 314 can be configured to overcome same-origin policy issues. A same-origin policy restricts which network messages one origin can send to another. In some embodiments, the same-origin policy permits scripts running on pages originating from the same site - a combination of scheme, hostname, and port number - to access each other's Document Object Model (DOM) with no specific restrictions, but prevents access to DOM on different sites. In some embodiments, the same-origin policy restricts how the UI integration service(s) 312 code loaded from the cloud platform 310 can interact with a resource from another origin.

The retail proxy module 314 can transfer the data request using a retail destination provided by a retail destination module 316. The retail destination module 316 can translate the query into the retail destination. The retail destination can be used for outbound communication from the cloud platform 310 to the back-end system 330 on which the requested data resides and/or from which the requested data is being retrieved. The retail destination can contain the connection details for the remote communication with the back-end system. The retail destination can be represented by a symbolic name and an identification of a virtual host, which can be used by the cloud platform 310 to securely and anonymously refer to remote connections. The symbolic name can be any identification (e.g., name) that uniquely represents the retail destination. In some embodiments, the identification of the virtual host does not reveal anything about the back-end system. For example, the identification of the virtual host can be characterized by an absence of any identification of the back-end system or its location.

The retail destination can also comprise an identification of a service that can be invoked on the back-end system to retrieve the requested data stored on the back-end system. In some embodiments, the identification of the service comprises an OData URL path, which can identify which OData service to invoke on the back-end system in order to retrieve the requested data from the back-end system. OData is a data access protocol.

In one example, a retail destination can read:
http://myapp.cloud/sap/iwbep/app1

In this example, the identification of the virtual host can be "myapp.cloud" and the identification of the service can be "sap/iwbep/app1." Other examples are also within the scope of the present disclosure.
The cloud platform 310 can transfer the data request, including the retail destination, to the cloud connector 320. Cloud connector 320 can resolve the missing information (e.g., the identification of the internal host on which the requested data resides). In some embodiments, the identification of the virtual host 322 (e.g., "myapp.cloud") is mapped into an identification of a real, concrete internal host 324 (e.g., "Idci-cat.wdf.sap.corp"). The internal host can identify the actual back-end system on which the requested data resides and/or from which the requested data is being retrieved. The identification of the service (e.g., "sap/iwbep/app1") can then be concatenated to the internal host (e.g., "1dcicat.wdf.sap.corp") by a retail service URL path module 326, thereby generating a complete link (e.g., "Idci-cat.wdf.sap.corp:5000/sap/iwbep/app1") for the data request.

The complete link, including the identification of the internal host and the identification of the service, can then be used to request the data from the back-end system 330. A retail service (e.g., an OData service) corresponding to the identification of the service in the complete link of the data request can be invoked to retrieve the requested data. The back-end system 330 can then provide the requested data to the cloud connector 320, which can then relay the requested data back to the cloud platform 310, where it can be caused to be displayed to the consumer 302 on the computing device 304.

The cloud connector 320 can act as a reverse proxy. By using a mapping of an identification of a virtual host to an identification of an internal host, the cloud connector 320 can enable the consumer 302 to access data on the back-end system 330, while preventing hackers, or any other ill-intentioned users attempting to perform a malicious trace, from accessing the data on the back-end system 330. The cloud connector 320 prevents anyone from accessing the data on the back-end system 330 simply by using the right username and password, as the identification of the internal host is not used, and therefore nor discoverable, within the DMZ.

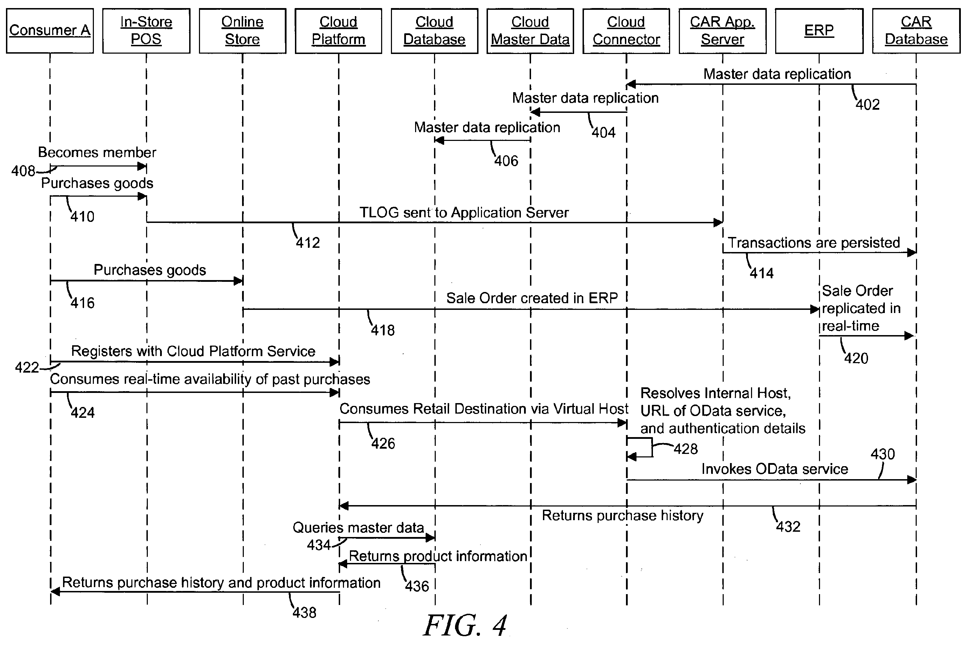

FIG. 4 is a process flow diagram illustrating data flow operations, in accordance with some example embodiments. The data flow operations can be performed by processing logic that can comprise hardware (e.g., circuitry, dedicated logic, programmable logic, microcode, etc.), software (e.g., instructions run on a processing device), or a combination thereof. In one implementation, the data flow operations of FIG. 4 are performed by the omni-channel purchase history system 300 of FIG. 3, or any combination of one or more of its components, as described above.

Master data (e.g,, product information) can reside on a repository database. The repository database can reside on the cloud platform 310. In some embodiments, the master data can reside on an enterprise cloud or on an on-premise domain, depending on different factors, including, but not limited to, data privacy, data volume, data type (e.g., master data, transactional data, configuration data), data update frequency, and the systems relying on the data. Mater data fits well on the cloud platform 310 because it does not contain private user information, its volume is rather low, the data is not updated frequently, and the cloud applications often rely heavily on this information.

Through operations 402, 404, and 406, the master data can be replicated from the repository database on the back-end system 330 to a cloud database on the cloud platform 310. This replication can be asynchronous and permanent, meaning that the applications querying the master data no longer need to communicate with the repository database on the back-end system 330.

At operation 408, after the system is configured and master data is replicated, consumers, such as consumer A, can start registering. The first step can be completed in a physical store (e.g., brick-and-mortar store 306) using an in-store POS terminal, such as when a consumer becomes a loyalty member. This operation can be accomplished when the consumer is purchasing goods and reading information about the program.

At operation 410, the consumer can purchase goods via an in-store POS terminal. At operation 412, the in-store POS terminal can update the transaction logs on a repository application server directly. The repository application server can reside on the back-end system 330. At operation 414, the repository application server can persist the data on the repository database (e.g., following a 3-tier architecture).

In situations where goods are purchased online at operation 416, corresponding sale orders can be created directly on an enterprise resource planning (ERP) application server at operation 418. ERP application server can reside on back-end system 330 and can comprise business management software (e.g., a suite of integrated applications) that a company can use to store and manage data from every stage of business. ERP can provide an integrated real-time view of core business processes, using common databases maintained by a database management system. ERP systems track business resources (e.g., cash, raw materials, production capacity) and the status of business commitments (e.g., orders, purchase orders, and payroll). The applications that make up the system can share data across the various departments (e.g., manufacturing, purchasing, sales, accounting, etc.) that entered the data. ERP can facilitate information flow between all business functions, and can manage connections to outside stakeholders. At operation 420, in order to keep track of all retail channels, the ERP sale orders can be replicated in real-time, or near real-time, on the repository database. As a result, both in-store purchases and online purchases can become present on the repository database.

After purchasing goods on these different retail channels and receiving a loyalty member identification (ID), the consumer can consult his purchase history. At operation 422, the consumer can register with a corresponding service on the cloud platform 310. At operation 424, the consumer can attempt to consume the real-time availability of his or her purchase information (e.g., information about past purchases). The consumer can log on to the cloud platform service, and query one or more past purchases in real-time (or near real-time). This data consumption can refer to both in-store (brick-and-mortar) purchases and online purchases, despite the fact that they are coming from different channels.

At operation 426, the cloud platform 310 can translate the query into a retail destination, which can be used for the outbound communication of the cloud platform 310 to the back-end system 330. As previously discussed, the retail destination can contain the connection details for the remote communication with the back-end system 330. The retail destination can be represented by a symbolic name and a virtual host, which can be used by the cloud platform 310 to securely and anonymously refer to remote connections. A data request, including the retail destination, can be sent to the cloud connector 320.

At operation 428, the cloud connector can resolve the internal host at runtime based on the symbolic name and virtual host provided in the request, which can produce an object that contains customer-specific configuration details, such as an internal host, the URL of the remote system or service, the authentication type, and the relative credentials (e.g., username and password).

At operation 430, the cloud connector 430 can cause the service (e.g., an OData service) on the back-end system 330 to be invoked on the repository database in order to obtain the requested purchase information. At operation 432, the purchase information (e.g., in the form of an OData signature containing the purchase history) can be returned to the cloud platform 310.

In some embodiments, the repository database only returns a subset of the information requested by or relevant to the consumer. For example, in some embodiments, the repository database returns a product ID, but not a complete description of the corresponding product. At operations 434 ad 436, this missing information can be retrieved directly from the cloud database using the master data replicated via operations 402, 404, and 406. At operation 438, the retrieved purchase information and product information can be returned to each invoking software/protocol/server layer, where it can be displayed or otherwise presented to the consumer.

It is contemplated that any of the other features described within the present disclosure can be incorporated into the data flow operations of FIG. 4.

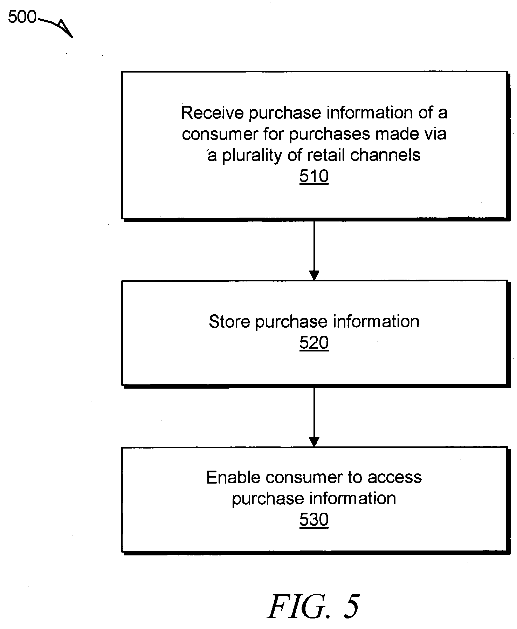

FIG. 5 is a flowchart illustrating a method 500, in accordance with some example embodiments. Method 500 can be performed by processing logic that can comprise hardware (e.g., circuitry, dedicated logic, programmable logic, microcode, etc.), software (e.g., instructions run on a processing device), or a combination thereof. In one implementation, the method 500 is performed by the an omni-channel purchase history system 300 of FIG. 3, or any combination of one or more of its components (e.g., cloud connector 320), as described above. At operation 510, purchase information of a consumer can be received. The purchase information can comprise information about purchases made by the consumer via a plurality of retail channels. In some embodiments, the plurality of retail channels comprise a brick-and-mortar retail channel and an online retail channel. At operation 520, the purchase information can be stored in one or more databases. At operation 530, the consumer can be enabled to access the stored purchase information via a computing device. In some embodiments, the purchase information is made accessible to the user in near real-time. It is contemplated that any of the other features described within the present disclosure can be incorporated into method 500.

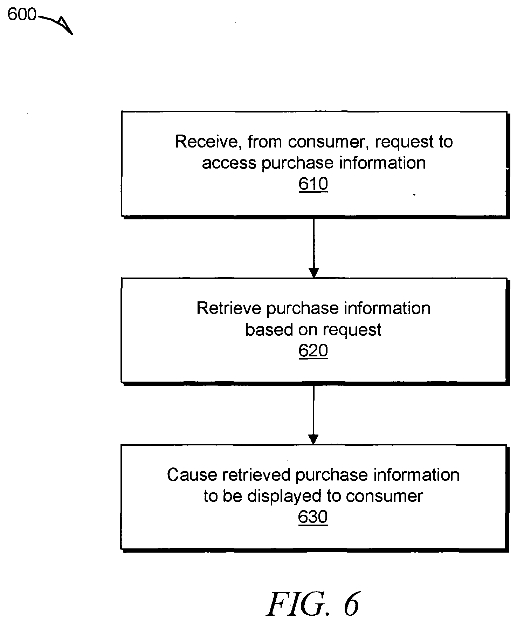

FIG. 6 is a flowchart illustrating a method of enabling a consumer to access the stored purchase information (e.g., as mentioned above with respect to operation 530 in FIG. 5), in accordance with some example embodiments. Method 600 can be performed by processing logic that can comprise hardware (e.g., circuitry, dedicated logic, programmable logic, microcode, etc.), software (e.g., instructions run on a processing device), or a combination thereof. In one implementation, the method 600 is performed by the omni-channel purchase history system 300 of FIG. 3, or any combination of one or more of its modules (e.g., cloud connector 320), as described above. At operation 610, a request to access purchase information can be received. At operation 620, the purchase information can be retrieved based on the request. At operation 630, the retrieved purchase information can be caused to be displayed to the consumer on the computing device. It is contemplated that any of the other features described within the present disclosure can be incorporated into method 600.

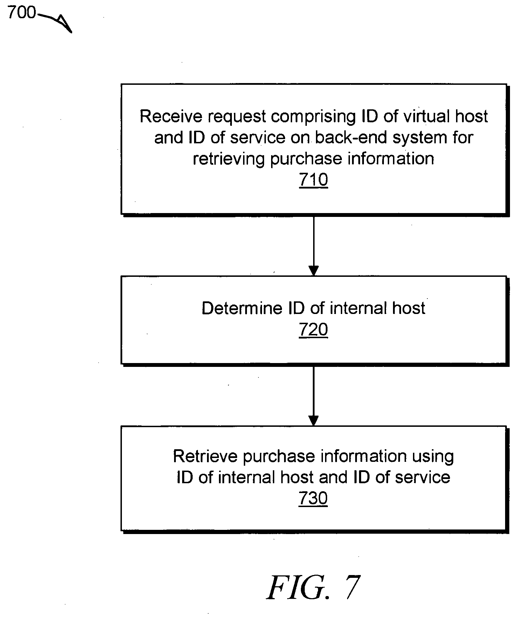

FIG. 7 is a flowchart illustrating a method of retrieving the purchase information (e.g., as mentioned above with respect to operation 620 in FIG. 6), in accordance with some example embodiments. Method 700 can be performed by processing logic that can comprise hardware (e.g., circuitry, dedicated logic, programmable logic, microcode, etc.), software (e.g., instructions run on a processing device), or a combination thereof. In one implementation, the method 700 is performed by the omni-channel purchase history system 300 of FIG. 3, or any combination of one or more of its modules (e.g., cloud connector 320), as described above. At operation 710, a request to access purchase information can be received. In some embodiments, the request comprises an identification of a virtual host and an identification of a service to invoke on a back-end system in order to retrieve the purchase information stored on the back-end system. The back-end system can be associated with a service provider corresponding to the purchase information. At operation 720, an identification of an internal host can be determined. In some embodiments, the identification of the internal host is determined based on the identification of the virtual host. At operation 730, the purchase information can be retrieved using the identification of the internal host and the identification of the service. In some embodiments, the identification of the service comprises an identification of an OData service on the back-end system. The identification of the service can comprise an OData URL path, and the purchase information can be retrieved using a concatenation of the OData URL with the identification of the internal host. It is contemplated that any of the other features described within the present disclosure can be incorporated into method 700.

In some embodiments, the techniques of the present disclosure enable a consumer to view his purchase history for one service provider from all available retail channels. There are many other use cases. In some embodiments, a consumer can retrieve his sales history for multiple service providers on any device. In some embodiments, a consumer can re-purchase items that were previously purchased. In some embodiments, in response to consumers interacting with their purchase history, promotions can be targeted to the corresponding consumers based on predictive logic and previous purchases (e.g., displaying promotions to the consumer while the consumer is viewing purchase information). In some embodiments, an ecosystem can be created to add new features and enhance the consumer experience when consumers interact with their sales history.

In some embodiments, the omni-channel purchase history system 300 can enable a consumer to find out the details of previous purchases (e.g., name of the product, make/model of purchased product, price of product, date/time of purchase, location of purchase), and then enable the consumer to perform further actions directed toward the products of the previous purchases, or their corresponding service providers, based on the details. For example, a consumer can use the omni-channel purchase history system 300 to find out the details of a purchase of a pair of pants the consumer made. The consumer can use the omni-channel purchase history system 300 to find the original purchase transaction of the pair of pants, and then find the closest store that has the same pair of pants in inventory. The consumer can then use the omni-channel purchase history system 300 to reserve the pair of pants so that it can be picked up at the store by the consumer. This query and reserve use case can be applied to any products.

In some embodiments, the consumer can gain access to his or her purchase information (e.g., sales transactions) via the following actions. The consumer can register for a loyalty program with a service provider. The registration can be handled by the service provider. During the registration process, the consumer can be explained the features, which include access to a web site where the consumer can view his or her purchase information. The consumer can accept one or more loyalty licensing agreements and complete the registration for loyalty membership. Once the consumer is a registered loyalty member, the consumer can be sent a link to the cloud application of the cloud platform 310. The consumer can then log on to the cloud application using his loyalty membership credentials or e-mail credentials. During the initial logon, the consumer can be prompted with a membership agreement, which authorizes the replication of the consumer's purchase information the cloud platform 310. Once the consumer accepts the membership agreement, the purchase information for the consumer can be replicated to the cloud application from the back-end system 330 in real-time or near real-time. In some embodiments, only registered loyalty members who have accepted the licensing agreement on the cloud application can have their purchase information replicated to the cloud application. An initial load of all purchase information can take place. Any changes to existing sales transactions by the back-end system 330 can also be replicated in real-time or near real-time. The replication can include all sales transactions for all channels for the consumer. As sales are processed and replicated into back-end system 330, they can be saved in separate tables (e.g., sales transactions completed within the stores can be stored as TLOGS and sales completed in other channels can be stored as orders. In some embodiments, the cloud application does not make the distinction between a TLOG and an order, but instead considers both as purchase history information. The extraction process from the back-end system can handle the mapping between TLOG and sales orders to purchase history information.

The following description describes how the cloud application on the cloud platform 310 can be used for purchase transactions that take place within the store (e.g., brick-and-mortar) channel. In some embodiments, the consumer makes a purchase within a physical store. In some embodiments, the consumer is not known at this point in time, so the loyalty card can be scanned so that the consumer can accumulate points for the current transaction. When the card is scanned, the consumer's membership information can be determined, from which the consumer can now be identified. At this point in time, a TLOG transaction can be created and the loyalty information can be added to the TLOG file that will be sent to the back-end system 330 at the head office. Once the purchase information (e.g., TLOG) is persisted in the back-end system 330, it can be replicated to cloud platform 310.

The following description describes how the cloud application on the cloud platform 310 can be used for sale transactions that take place within other channels besides the physical store. In some embodiment, the consumer makes a purchase at a kiosk or online. These purchases can create sales orders. At the point of order creation, the consumer can be known and identified on the order. The sales order can be created in the back-end system 330 directly. As soon as the sales order is saved or updated in an ERP, the order can be replicated to the repository database in real-time. In some embodiments, the replication can be handled by the system landscape transformation application. All sales orders can be replicated. Once the ERP sales order for the consumer is replicated to the repository database, a check can be done to confirm that this consumer has agreed to have his sales history replicated to the cloud platform 310. All validated orders, new or modified, can be replicated to the cloud platform 310 for members that have agreed to do so. When the consumer views his sales history on the cloud platform 310, the sales order details can now be available. In some embodiments, the sales transactions in the repository database and ERP can be modified. As sale transactions are modified, the updated TLOG or sales orders can be reflected in the cloud platform 310. The repository database can automatically replicate updated sales transactions to the cloud platform 310 for registered members of the cloud application.

The following description describes how consumers can query their sales history using the application on the cloud platform 310. The consumer can log onto the cloud application to view his or her transaction history. The consumer can use his or her loyalty membership ID or e-mail address to log on. The consumer can view his sales history on any computing device. The cloud application can allow the consumer to query his or her sales history by different characteristics (e.g., date, date range, product, category, location, price, price range).

The following description describes how a user can deactivate his or her membership on the cloud portal application. The cloud portal member can log on to the portal application. The consumer can then request that his membership be deactivated. A member can deactivate his or her cloud portal membership but still retain his loyalty membership. Once deactivation has been requested, all data for the cloud application can be deleted on the cloud platform 310. In some embodiments, the only data that is retained is the original document from the member, authorizing the replication of the sales history from the SAP Customer Activity Repository to the cloud platform 310, which can be retained for a corresponding legal term. Once all of the data has been deleted, an e-mail can be sent to the member. A copy of the e-mail can be stored in the back-end system 330. The e-mail can be deleted once an appropriate legal timeframe has elapsed.

### EXAMPLE MOBILE DEVICE

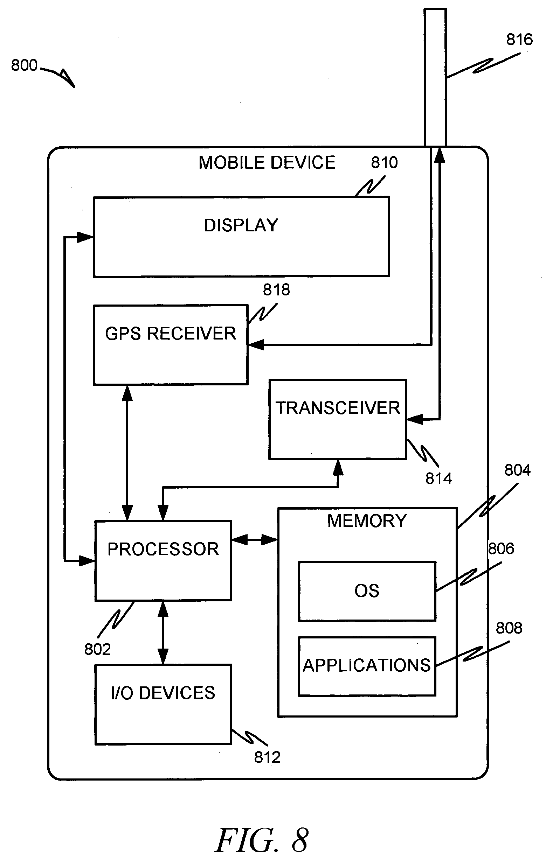

Figure 8 is a block diagram illustrating a mobile device 800, according to an example embodiment. The mobile device 800 can include a processor 802. The processor 802 can be any of a variety of different types of commercially available processors suitable for mobile devices 800 (for example, an XScale architecture microprocessor, a Microprocessor without Interlocked Pipeline Stages (MIPS) architecture processor, or another type of processor). A memory 804, such as a random access memory (RAM), a Flash memory, or other type of memory, is typically accessible to the processor 802. The memory 804 can be adapted to store an operating system (OS) 806, as well as application programs 808, such as a mobile location enabled application that can provide LBSs to a user. The processor 802 can be coupled, either directly or via appropriate intermediary hardware, to a display 810 and to one or more input/output (I/O) devices 812, such as a keypad, a touch panel sensor, a microphone, and the like. Similarly, in some embodiments, the processor 802 can be coupled to a transceiver 814 that interfaces with an antenna 816. The transceiver 814 can be configured to both transmit and receive cellular network signals, wireless data signals, or other types of signals via the antenna 816, depending on the nature of the mobile device 800. Further, in some configurations, a GPS receiver 818 can also make use of the antenna 816 to receive GPS signals.

### MODULES, COMPONENTS AND LOGIC

Certain embodiments are described herein as including logic or a number of components, modules, or mechanisms. Modules can constitute either software modules (e.g., code embodied on a machine-readable medium or in a transmission signal) or hardware modules. A hardware module is a tangible unit capable of performing certain operations and can be configured or arranged in a certain manner. In example embodiments, one or more computer systems (e.g., a standalone, client, or server computer system) or one or more hardware modules of a computer system (e.g., a processor or a group of processors) can be configured by software (e.g., an application or application portion) as a hardware module that operates to perform certain operations as described herein.

In various embodiments, a hardware module can be implemented mechanically or electronically. For example, a hardware module can comprise dedicated circuitry or logic that is permanently configured (e.g., as a special-purpose processor, such as a field programmable gate array (FPGA) or an application-specific integrated circuit (ASIC)) to perform certain operations. A hardware module can also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) can be driven by cost and time considerations.

Accordingly, the term "hardware module" should be understood to encompass a tangible entity, be that an entity that is physically constructed, permanently configured (e.g., hardwired) or temporarily configured (e.g., programmed) to operate in a certain manner and/or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor can be configured as respective different hardware modules at different times. Software can accordingly configure a processor, for example, to constitute a particular hardware module at one instance of time and to constitute a different hardware module at a different instance of time.

Hardware modules can provide information to, and receive information from, other hardware modules. Accordingly, the described hardware modules can be regarded as being communicatively coupled. Where multiple of such hardware modules exist contemporaneously, communications can be achieved through signal transmission (e.g., over appropriate circuits and buses) that connect the hardware modules. In embodiments in which multiple hardware modules are configured or instantiated at different times, communications between such hardware modules can be achieved, for example, through the storage and retrieval of information in memory structures to which the multiple hardware modules have access. For example, one hardware module can perform an operation and store the output of that operation in a memory device to which it is communicatively coupled. A further hardware module can then, at a later time, access the memory device to retrieve and process the stored output. Hardware modules can also initiate communications with input or output devices and can operate on a resource (e.g., a collection of information).

The various operations of example methods described herein can be performed, at least partially, by one or more processors that are temporarily configured (e.g., by software) or permanently configured to perform the relevant operations. Whether temporarily or permanently configured, such processors can constitute processor-implemented modules that operate to perform one or more operations or functions. The modules referred to herein can, in some example embodiments, comprise processor-implemented modules.

Similarly, the methods described herein can be at least partially processor-implemented. For example, at least some of the operations of a method can be performed by one or more processors or processor-implemented modules. The performance of certain of the operations can be distributed among the one or more processors, not only residing within a single machine, but deployed across a number of machines. In some example embodiments, the processor or processors can be located in a single location (e.g., within a home environment, an office environment or as a server farm), while in other embodiments the processors can be distributed across a number of locations.

The one or more processors can also operate to support performance of the relevant operations in a "cloud computing" environment or as a "software as a service" (SaaS). For example, at least some of the operations can be performed by a group of computers (as examples of machines including processors), these operations being accessible via a network (e.g., the network 114 of FIG. 1) and via one or more appropriate interfaces (e.g., APIs).

Example embodiments can be implemented in digital electronic circuitry, or in computer hardware, firmware, software, or in combinations of them. Example embodiments can be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations can be performed by one or more programmable processors executing a computer program to perform functions by operating on input data and generating output. Method operations can also be performed by, and apparatus of example embodiments can be implemented as, special purpose logic circuitry (e.g., a FPGA or an ASIC).

A computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware can be a design choice. Below are set out hardware (e.g., machine) and software architectures that can be deployed, in various example embodiments.

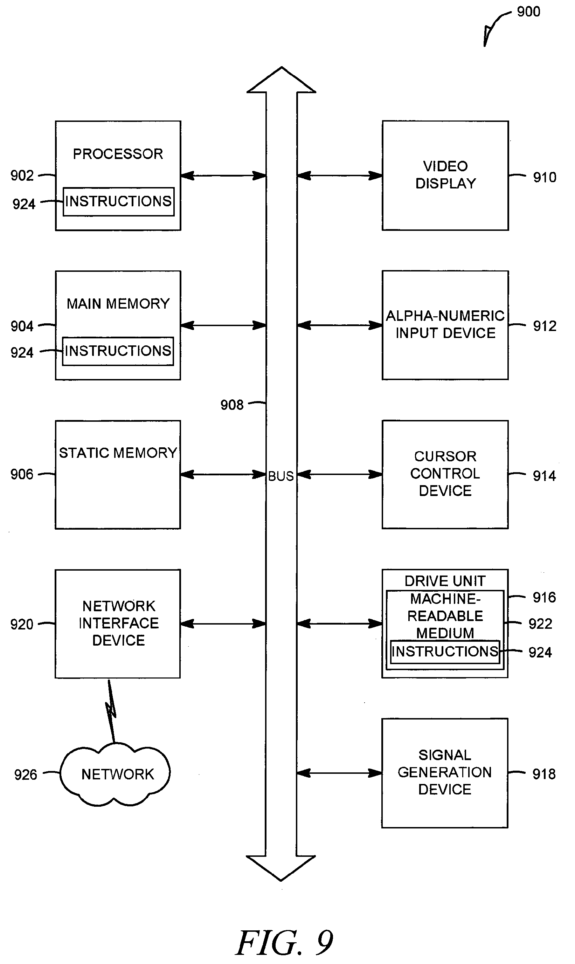

FIG. 9 is a block diagram of a machine in the example form of a computer system 900 within which instructions 924 for causing the machine to perform any one or more of the methodologies discussed herein can be executed, in accordance with an example embodiment. In alternative embodiments, the machine operates as a standalone device or can be connected (e.g., networked) to other machines. In a networked deployment, the machine can operate in the capacity of a server or a client machine in a server-client network environment, or as a peer machine in a peer-to-peer (or distributed) network environment. The machine can be a personal computer (PC), a tablet PC, a set-top box (STB), a Personal Digital Assistant (PDA), a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 900 includes a processor 902 (e.g., a central processing unit (CPU), a graphics processing unit (GPU) or both), a main memory 904 and a static memory 906, which communicate with each other via a bus 908. The computer system 900 can further include a video display unit 910 (e.g., a liquid crystal display (LCD) or a cathode ray tube (CRT)). The computer system 900 also includes an alphanumeric input device 912 (e.g., a keyboard), a user interface (UI) navigation (or cursor control) device 914 (e.g., a mouse), a disk drive unit 916, a signal generation device 918 (e.g., a speaker) and a network interface device 920.

The disk drive unit 916 includes a machine-readable medium 922 on which is stored one or more sets of data structures and instructions 924 (e.g., software) embodying or utilized by any one or more of the methodologies or functions described herein. The instructions 924 can also reside, completely or at least partially, within the main memory 904 and/or within the processor 902 during execution thereof by the computer system 900, the main memory 904 and the processor 902 also constituting machine-readable media. The instructions 924 can also reside, completely or at least partially, within the static memory 906.

While the machine-readable medium 922 is shown in an example embodiment to be a single medium, the term "machine-readable medium" can include a single medium or multiple media (e.g., a centralized or distributed database, and/or associated caches and servers) that store the one or more instructions 924 or data structures. The term "machine-readable medium" shall also be taken to include any tangible medium that is capable of storing, encoding or carrying instructions for execution by the machine and that cause the machine to perform any one or more of the methodologies of the present embodiments, or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices (e.g., Erasable Programmable Read-Only Memory (EPROM), Electrically Erasable Programmable Read-Only Memory (EEPROM), and flash memory devices); magnetic disks such as internal hard disks and removable disks; magneto-optical disks; and compact disc-read-only memory (CD-ROM) and digital versatile disc (or digital video disc) read-only memory (DVD-ROM) disks.

The instructions 924 can further be transmitted or received over a communications network 926 using a transmission medium. The instructions 924 can be transmitted using the network interface device 920 and any one of a number of well-known transfer protocols (e.g., HTTP). Examples of communication networks include a LAN, a WAN, the Internet, mobile telephone networks, POTS networks, and wireless data networks (e.g., WiFi and WiMax networks). The term "transmission medium" shall be taken to include any intangible medium capable of storing, encoding, or carrying instructions for execution by the machine, and includes digital or analog communications signals or other intangible media to facilitate communication of such software.

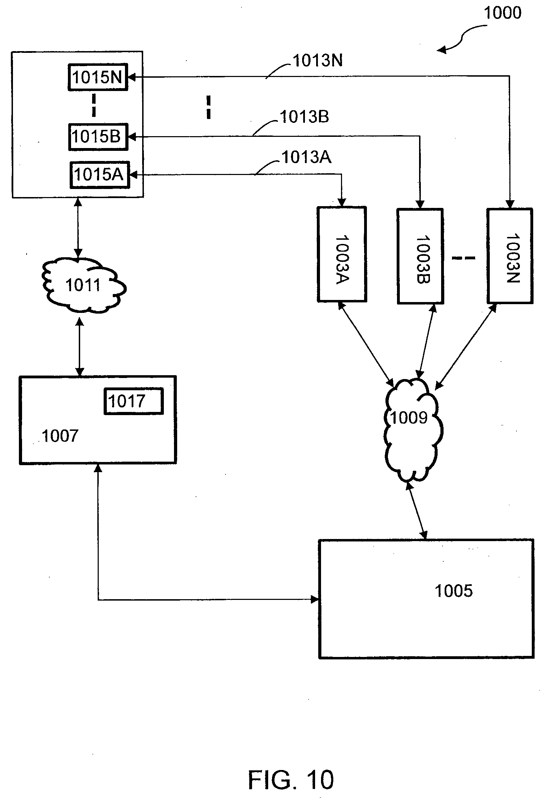

FIG. 10 is a representative view of a telecommunication system 1000 in accordance with an example of the present disclosure. The telecommunication system 1000 comprises a mobile telecommunication device 1001 (such as device 800 of FIG. 8). The telecommunication system 1000 further comprises electronic devices 1003A-N. An electronic device of the electronic devices 1003A-N may comprise a terminal, a server an automated (or automatic) vending machine, an electronic loyalty system, or an automated payment machine such as a parking meter. The telecommunication system 1000 further comprises a backend server 1005.

The mobile telecommunication device 1001 stores a plurality of mobile applications 1015A-N e.g. in a memory (not shown) of the mobile telecommunication device 1001 (such as memory 804 of FIG.8). Each of the plurality of mobile applications 1015A-N comprises instructions that when executed cause a processor (e.g. 802) of the mobile telecommunication device 1001 to connect to a respective electronic device for requesting a service to the electronic device 1003A-N. For example, each mobile application of the plurality of mobile application 1015A-N may enable access to services provided by one or more electronic devices of the electronic devices 1003A-N. For example, mobile application 1015A may comprise a web application that may be used by a user of the mobile telecommunication device 1001 (or of the mobile application 1015A) to connect via a communication channel 1013A to the electronic device 1003A being a web server in order to register with the web server. And, the electronic device 1003A-N may be adapted (when the instructions are executed) to send a response to the service request (e.g. a registration confirmation message) using at least a first user identification address assigned to the user of the mobile application. For example, for each mobile application of the plurality of mobile applications a respective first user identification address may be used to send the response to the service request performed using that mobile application. The first user identification address may for example be an email address or an IP address of the mobile telecommunication device 1001 of the user etc. Following the above example, the web server 1003A may send a confirmation message or an acknowledgement message indicating the subscription of the user via the communication channel 1013A. The confirmation message may comprise account details of the user as well as (pdf) documents e.g. guides comprising instructions on how to access and/or use services provided by the web server. The confirmation message may be sent for example as an email to the user of the mobile telecommunication device 1001 that may be received at the mobile telecommunication device 1001. In another example, the mobile application may comprise a mobile application allowing the user to purchase items from an automated vending machine 1003C e.g. via a near field communication between the mobile telecommunication device 1001 and the automated vending machine 1003C.

Each of the electronic devices 1003A-N is connected to the backend server 1005 via at least one network 1009. For example, network 1009 may comprise a local area network (LAN), a general wide area network (WAN), and/or a public network (e.g., the Internet).

The mobile telecommunication system 1000 further comprises a DMZ interface 1007 (e.g. DMZ of FIG. 3) between the back-end server 1005 and the network 1011 that connects the mobile telecommunication device 1001 to the back-end server 1005. A DMZ interface is a computer or small subnetwork that sits or is inserted between a network e.g. a private network such as a corporate private LAN (that comprises the backend server 1005), and an untrusted external network, such as the public Internet. The DMZ interface 1007 may prevent outside users such as the mobile telecommunication device 1001 from getting direct access to the back-end server 1005. The DMZ interface 1007 may include a web server or service and (optionally) one or more firewalls. Firewalls provide security for DMZ. Web server of the DMZ interface 1007 may receive users' requests and process these requests by forwarding them (e.g. via a firewall of the one or more firewalls or directly) to the back-end server 1005. In one example, the DMZ interface 1007 may act as a proxy server. For example, the mobile telecommunication device 1001 can access only the DMZ interface 1007.

For example, at least part of the telecommunication system 1000 may be provided as part of a cloud computing environment that enables users to use compute resources such as the backend server 1005 including the DMZ interface 1007 and the electronic devices 1003A-N as a utility (the DMZ interface 1007 may be part of the cloud connector 320 as described above). In another example, the cloud computing environment may provide the backend server 1005 as part of the cloud computing and the present method as a utility service e.g. allowing for example to send data by the electronic devices 1003A-N and to store them at the backend server etc. For example, the at least part of the telecommunication system 1000 may be provided as in-memory Platform-as-a-Service. The provider's computing resources are pooled to serve multiple users using a multi-tenant model, with different physical and virtual resources dynamically assigned and reassigned according to consumer demand.

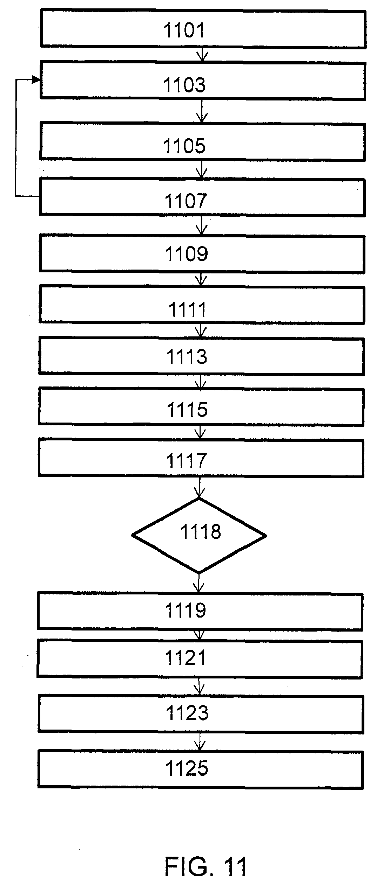

The operation of the telecommunication system 1000 will be described in more details with reference to FIG. 11.

FIG. 11 is a flowchart of a method for securing data access to the telecommunication system 1000. In step 1101, a second identification address may be assigned to the backend server 1005. The second identification address defines a network connection of the second network 1009 to the backend server 1005 (e.g. the second identification address may be a destination address that may be used by an electronic device 1003A in order to send data to the backend server 1005 via the network connection which refers to a connection
between the electronic device 1003A and the backend server 1005 that is initiated or established over the second network). The network connection may be a trusted network connection such as a secure HTTP connection. The second identification address may comprise an IP address of the backend server 1005 or an FTP address. For example, the communication between the backend server 1005 and each of the electronic devices 1003A-N may use a cryptographic protocol such as Transport Layer Security (TLS) and Secure Sockets Layer (SSL).

For each mobile application of the plurality of mobile applications 1015A-N, the mobile telecommunication device 1001 may receive from the user a service request.

The service request may comprise for example a query for an operational status of the electronic device 1003A-N e.g. the number of services satisfied or the number of times the electronic device 1003A-N has been used to provide a given service at a given time interval for the user. In another example, the service request may comprise a request to upload an electronic document such as a picture to the electronic device 1003A, wherein the electronic device may comprise a web server that hosts that electronic document. In another example, the service request may comprise a request to purchase items from an automated vending machine of the electronic devices 1003A-N.

For example, the user may launch the mobile application by clicking on an icon that represents the mobile application and that is displayed on a display of the mobile telecommunication device 1001. As soon as launched the instructions of the mobile application may be executed by for example displaying on the display of the mobile telecommunication device 1001 a graphical user interface that may indicate using user interface elements services provided by an electronic device of the electronic devices 1003A-N. A mobile application 1015B may comprise a payment application for paying using the mobile telecommunication device 1001 at a payment machine e.g. 1003B.

The term "user interface element" as used herein may be understood as a user interface object, or a set of user interface objects, displayed on a display screen of a device. A user interface element comprises a button, a text box, a tab, an icon, a text field, a pane, a check-box item, a menu bar, a title bar, an action bar or item group or the like. A user interface element may likewise be an image, a displayed alphanumeric character or any combination thereof.

The term "graphical user interface" or "user interface" as used herein refers to an interface generated by a program for display on a display screen of a device with selectable user interface elements.

The term "server" refers to a computer hardware and/or software that communicates with other electronic devices through a network. The server may comprise a computer server such as a web server.

The term "terminal" as used herein encompasses a device that is capable of establishing a communication link with a second device for transmitting, receiving or exchanging information with that second device. As one example, the terminal may comprise a payment device. In another example, the terminal may comprise an access control terminal that controls access to a given area. For example, the terminal may receive a service request from the user of the mobile telecommunication device for accessing the area and may send an unlock signal to an automatic door opening and closing system for enabling (e.g. an automatic door opens) the user of the mobile telecommunication device to access or enter the area e.g. building that can only be accessed via the automatic door. For example, the service request may be automatically sent to the terminal by for example "swiping," "tapping," "bumping" or otherwise moving the mobile telecommunication device in close proximity to the terminal being an NFC enabled device. The mobile telecommunication device may use a built-in NFC reader or writer of the mobile telecommunication device to transmit the service request to (a NFC tag of) the terminal as soon as the terminal (e.g. the NFC tag) is detected within e.g. the 10-centimeter read or access range.

In response to receiving the service request (e.g. after receiving the selection of the service indicated in the graphical user interface), the mobile telecommunication device 1001 may establish in step 1103 a communication channel to the electronic device 1003A-N (that corresponds to the mobile application i.e. that provides requested service) for forwarding the service request by the mobile telecommunication device 1001. For example, the communication channel established may be performed using a short-range wireless technology such as near field communication (NFC). And, the mobile telecommunication device 1001 and at least part of the electronic devices 1003A-N are NFC-enabled devices. For example, the distance of the mobile telecommunication device 1001 and the electronic device 1003A-N is 10 cm or less. For example, the communication channel may comprise an NFC peer-to-peer communication channel. In another example, the mobile telecommunication device 1001 and the electronic devices 1003A-N may communicate via a network that may comprise a LAN, a general WAN, and/or a public network (e.g., the Internet). In another example, the mobile telecommunication device 1001 and the electronic devices 1003A-N may communicate via Bluetooth, Zigbee in order to communicate the service request and other data.

In step 1105, the electronic device 1003A-N may process the service request. For example, the electronic device 1003A-N may store the electronic document received from the user (the mobile telecommunication device 1001). In another example, the electronic device 1003A-N being the automated vending machine may provide the purchased item.

In step 1107, the electronic device redirects (sends) to the backend server 1005 the response to the service request by using the second identification address instead of the first user identification address. This may avoid sending back responses to the mobile telecommunication device 1001 as described above in another example of FIG. 10. For example, the electronic device 1003A-N (being the automated vending machine) may send the response indicating details of the purchase such as the time at which the purchase has been made, an electronic document describing the purchased item etc. For example, the electronic device 1003A-N may generate a cryptographic key pair comprising a public encrypting key and a private encrypting key. The response may be encrypted by the electronic device 1003A-N using the public encrypting key in order to generate encrypted data. The encrypted data may then be sent together with both keys to the backend server 1005 by the electronic device 1003A-N. In one example, the electronic device 1003A-N may in addition send the private decryption key to the mobile telecommunication device 1001. For example, only one of the electronic devices 1003A-N (only for one mobile application of the plurality of mobile applications of the same user) may send a private decryption key to the mobile telecommunication device 1001. This may save storage resources in the mobile telecommunication device 1001 in particular when the submitted private decryption key is used for authenticating the mobile telecommunication device 1001 at the backend server 1005 as described below.

In step 1109, the backend server 1005 may store response data comprising the received responses in association with a user ID of the user. For example, the backend server 1005 may receive a plurality of responses that corresponds to the respective plurality of service requests that have been performed or received at the respective plurality of mobile applications 1015A-N. In this way, a common storage place is provided for data of the user. This may facilitate access to data, and save processing resources such as data traffic may be reduced in the telecommunication system, because otherwise the user has to connect to each electronic device that has provided a service in order to get his or her data. For example, this may also avoid storing response data in the mobile telecommunication device as the mobile telecommunication device 1001 may not have enough storage space and enough processing resources to save and to process the response data locally.

In step 1111, the backend server 1005 may generate a web service 1017 for providing the response data via an URL. A Web service may provide a method of communication between two electronic devices over a network. For example, the web service may comprise a software system (e.g. a code implementing an XML interface for accessing a given set of data at the backend server 1005) designed to support interoperable machine-to-machine interaction over a network. For example, the web service may be generated at once (for the user of the mobile telecommunication device) and thereafter the web service may receive one or more data access requests from the user of the mobile telecommunication device to access at least the given data set. In another example, the web service may be dynamically generated as soon as new responses or data is received from an electronic device at the backend server such that the web service may enable the access to the newly received data via the DMZ interface in addition to the given data set. The response data that are accessible via the URL may only comprise data related to or of the user of the mobile telecommunication device 1001.

The web service 1017 is placed in the DMZ interface 1007 in step 1113. For example, a server may provide storage or a web service to another computing device. For example, the DMZ interface 1007 may have web pages (and the response data of the user of the mobile telecommunication device 1001) provided by the web service 1017 so these (web pages and the response data) could be served to the outside e.g. to the mobile telecommunication device 1001. However, the DMZ interface 1007 does not provide the user of the mobile telecommunication device 1001 access to other data on the backend server 1005 such as the response data of other users. With this limited data access method, other users data may be protected.

For example, the web service becomes inoperative after a predetermined duration. This may enhance the secure aspect of the present method. In this example, the mobile telecommunication device 1001 may be able to retrieve or access the response data only for the predetermined duration. After this, the URL becomes inoperative and the mobile telecommunication device 1001 may no longer retrieve or access the response data. This may provide more security that the response data will not be stolen.

In step 1115, the backend server 1005 may receive from the mobile telecommunication device 1001 a data access request to access at least part of the stored response data. The data access request is indicative of the user ID. For example, the mobile telecommunication device 1001 may generate a signature using the private decryption key and the data access request may further indicate that signature. In case of a cloud computing environment, the data access request may comprise an identification of a virtual host (e.g. backend server) and an identification of a service (e.g. web service) to invoke on a back-end system to retrieve the response data.

In step 1117 the backend server 1005 may authenticate the mobile telecommunication device 1001 using the user ID. For example, the backend server 1005 may check if the user ID is comprised in a list of authorized users that is stored in the backend server 1005. In another example, the backend server 1005 may additionally or alternatively authenticate the mobile telecommunication device 1001 using the signature. The backend server 100 may verify that signature (using the corresponding public encrypting key) in order to authenticate the mobile telecommunication device 1001. This may increase the secure aspect of the present method in that an authentication based on two input values is more secure than an authentication based on a single input value.

In case of a successful authentication (Inquiry 1118) (e.g. the user ID is in the list of authorized users), the backend server 1005 may send in step 1119 the URL to the mobile telecommunication device 1001. As described above the URL may be inactive after a predetermined duration or time period such that the user cannot access the response data after that duration using the URL.

In step 1121 the mobile telecommunication device may access the web service 1017 at the URL for requesting the at least part of the response data from the backend server 1005 (or the mobile telecommunication de 1001 may request the at least part of the response data using the URL of the web service). For example, the URL may allow access to only the at least part of the response data but not the whole response data.

In step 1123, the backend server 1005 may receive the data access request of the at least part of the response data via the DMZ interface 1007. A Firewall of the DMZ interface 1007 may particularly be relevant in DMZ implementation, since it is responsible for ensuring that proper policies are in place to protect local networks from the DMZ interface 1007, while maintaining accessibility to the DMZ interface 1007.

In step 1125, the backend server 1005 may send result data indicative of the at least part of the response data to the mobile telecommunication device 1001. For example, the result data may comprise the at least part of the response data. In another example, the result data may result from the processing of the at least part of the response data by the backend server 1005. The processing may, for example, be performed using the data access request for generating the result data. For example, the at least part of the result data may be filtered such that the result data comprises at least one of: data received from electronic devices having a geographical location that matches the position of the mobile telecommunication device; data being received within a predefined time interval; data received from electronic devices being trusted systems. A trusted system is a system that supports Trusted Computer Group (TCG) security specifications. For example, the backend server 1005 may comprise or receive an indication of the electronic devices indicating that the electronic device is a trusted system or not.

For example, the backend server 1005 may process the at least part of the result data to select data that is received from the electronic devices that are in a distance to the mobile telecommunication device 1001 smaller than a predetermined maximum distance threshold (e.g. 1 km).

In another example, the backend server 1005 may process the at least part of the result data to select data that is received within a given time period e.g. from 2014 to 2015.

This may reduce the amount of the data to be transmitted to the mobile telecommunication device 1001. For example, the method to process or analyze the response data may be based on a service level agreement, SLA, wherein a SLA planning and fulfillment provides pre-arrangement for, and procurement of, cloud computing resources for which a future requirement is anticipated in accordance with an SLA. The SLA may comprise, for example, conditions on the data to be presented to the user such as the conditions on the time period or the geographical location of the electronic devices as described above.

Although specific embodiments have been illustrated and described herein, it should be appreciated that any arrangement calculated to achieve the same purpose can be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A telecommunication method for securely accessing user data in a telecommunication system (1000), the telecommunication system (1000) comprising a mobile telecommunications device (1001); the mobile telecommunication device (800, 1001) comprising a processor (802) and memory (804); wherein the memory stores a plurality of mobile applications (1015A-N) that are executable by the processor; each mobile application of the plurality of mobile applications (1015A-N) comprising instructions that when executed cause the processor to connect to a respective electronic device (1003A-N) of the telecommunication system (1000) for requesting a service to the electronic device (1003A-N), the electronic device comprising one of a terminal, server and automated vending machine, wherein the electronic device is adapted to send a response to the service request using a first user identification address assigned to a user of the mobile application; the method comprising:
- providing a backend server (1005) of the telecommunication system (1000), wherein the backend server (1005) is connected to the mobile telecommunication device (1001) via a first cellular digital telecommunication network (1011), the backend server (1005) being connected to the plurality of electronic devices (1003A-N) via at least a second network (1009);
- assigning to the backend server (1005) at least a second identification ad-dress, wherein the second identification address defines a network connection of the second network to the backend server (1005), wherein the network connection is a trusted network connection;
- for each mobile application of the plurality of mobile applications (1015A-N)
• receiving by the mobile telecommunication device (1001) from the user the service request;
• establishing a communication channel (1013A) via a third network to the electronic device (1003A) for forwarding the service request by the mobile telecommunication device (1001) to the electronic device (1003A);
• processing the service request by the electronic device (1003A);
• redirecting to the backend server the response to the service request by using the second identification address instead of the first user identification address by the electronic device (1003A);
- storing response data comprising the received responses in association with a user ID of the user by the backend server (1005);
- generating a web service (1017) for providing the response data via an URL by the backend server (1005);
- providing a demilitarized zone, DMZ, interface (1007) between the backend server (1005) and the mobile telecommunication device (1001);
- placing the web service (1017) in the DMZ interface (1007);
- receiving from the mobile telecommunication device (1001) a data access request to access at least part of the response data by the backend server (1005), wherein the data access request is indicative of the user ID;
- authenticating the mobile telecommunication device (1001) using at least the user ID;
- sending the URL to the mobile telecommunication device (1001) by the backend server (1005) in case of a successful authentication;
- accessing the web service (1017) at the URL for requesting the at least part of the response data from the backend server (1005) by the mobile telecommunication device (1001);
- receiving the data access request of the at least part of the response data via the DMZ interface (1007) by the backend server (1005);
- sending result data indicative of the at least part of the response data to the mobile telecommunication device (1001) by the backend server (1005) in response to the data access request of the at least part of response data by the mobile telecommunication device.

2. The method of claim 1, wherein the web service becomes inoperative after a predetermined duration.

3. The method of any of the preceding claims, wherein redirecting the response to the service request comprises:
- generating a cryptographic key pair by the electronic device, wherein the cryptographic key pair comprises a public encryption key and a private decryption key;
- encrypting the response to the service request using the public encryption key into first encrypted data by the electronic device;
- sending the first encrypted data as the response to the service request;
- sending the public encryption key and the private decryption key to the backend server.

4. The method of claim 3, further comprising:
- sending a given private decryption key of the plurality of private decryption keys to the mobile telecommunication device by the electronic device;
- generating a signature using the private decryption key by the mobile telecommunication device, wherein the data access request is indicative of the signature;
- verifying the signature using the public encrypting keys for authenticating the mobile telecommunication device by the backend server.

5. The method of claim 3 or 4, further comprising deleting the plurality of responses and the plurality of cryptographic keys.

6. The method of any of the preceding claims, wherein the third network comprises a near field communication, NFC, network, wherein each of the mobile telecommunication and the plurality of electronic devices is an NFC-enabled device.

7. The method of any of the preceding claims, wherein the mobile telecommunication device is a battery powered device, the sending of the result data comprising: processing the response data using the data access request for generating the result data, wherein the result data comprises at least one of:
- data received from electronic devices having a geographical location that matches the position of the mobile telecommunication device;
- data being received within a predefined time interval;
- data received from electronic devices being trusted systems.

8. The method of any of the preceding claims, wherein the response to the service request further indicates the geographical location of the electronic device.

9. The method of any of the preceding claims, wherein the trusted network connection comprises a secure HyperText Transfer Protocol (HTTP) connection.

10. The method of any of preceding claims, wherein the web service is provided as a service in a cloud computing environment comprising the backend server and the plurality of electronic devices as components of a distributed computing sys-tem of the cloud computing environment.

11. A computer program product comprising computer executable instructions to perform the method steps of the method of the preceding claims.

12. A telecommunication system comprising a mobile telecommunications device; the mobile telecommunication device comprising a processor and memory; wherein the memory stores a plurality of mobile applications that are executable by the processor; each mobile application of the plurality of mobile applications comprising instructions that when executed cause the processor to connect to a respective electronic device of the telecommunication system for requesting a service to the electronic device, wherein the electronic device is adapted to send a response to the service request using a first user identification address as-signed to a user of the mobile application, the electronic device comprising one of a terminal, server and automated vending machine; wherein the telecommunication system is operable to execute the method as claimed in one of the pre-ceding claims 1-10.

13. A mobile telecommunication device of the telecommunication system according to claim 12, wherein the mobile telecommunication device is configured for: receiving from a user a service request; establishing a communication channel via a network to an electronic device (1003A) for forwarding the service request to the electronic device (1003A); sending a data access request to access at least part of response data stored at a backend server (1005), wherein the data access request is indicative of a user ID of the user; receiving an URL from the backend server (1005); accessing a web service (1017) at the URL for requesting the at least part of the response data from the backend server (1005).

14. A backend server of the telecommunication system according to claim 12, wherein the backend server is configured for: storing response data comprising received responses from electronic devices in association with a user ID of a user of mobile telecommunication device that is connected to the backend server (1005); generating a web service (1017) for providing the response data via an URL; receiving from the mobile telecommunication device (1001) a data access request to access at least part of the response data (1005), wherein the data access request is indicative of the user ID; authenticating the mobile telecommunication device (1001) using at least the user ID; sending the URL to the mobile telecommunication device (1001) (1005) in case of a successful authentication; receiving the data access request of the at least part of the response data via a DMZ interface (1007); sending result data indicative of the at least part of the response data to the mobile telecommunication device (1001) in response to the data access request of the at least part of response data by the mobile telecommunication device.

15. An electronic device of the telecommunication system according to claim 12, wherein the electronic device is configured for processing a service request received from a mobile telecommunication device; and redirecting the response to the service request to a backend server by using an identification address of the backend server.

## Patentansprüche

1. Telekommunikationsverfahren zum sicheren Zugreifen auf Benutzerdaten in einem Telekommunikationssystem (1000), wobei das Telekommunikationssystem (1000) eine mobile Telekommunikationsvorrichtung (1001) umfasst; wobei die mobile Telekommunikationsvorrichtung (800, 1001) einen Prozessor (802) und einen Speicher (804) umfasst; wobei der Speicher mehrere mobile Anwendungen (1015A-N) speichert, die vom Prozessor ausführbar sind; wobei jede mobile Anwendung von den mehreren mobilen Anwendungen (1015A-N) Befehle umfasst, die, wenn sie ausgeführt werden, bewirken, dass sich der Prozessor mit einer entsprechenden elektronischen Vorrichtung (1003A-N) des Telekommunikationssystems (1000) verbindet, um eine Dienstanforderung an die elektronische Vorrichtung (1003A-N) zu stellen, wobei die elektronische Vorrichtung ein Terminal, einen Server oder einen Verkaufsautomaten umfasst, wobei die elektronische Vorrichtung dafür ausgelegt ist, unter Verwendung einer ersten Benutzeridentifikationsadresse, die einem Benutzer der mobilen Vorrichtung zugewiesen ist, eine Antwort auf die Dienstanforderungen zu senden; wobei das Verfahren umfasst, dass:
- ein Backend-Server (1005) des Telekommunikationssystems (1000) bereitgestellt wird, wobei der Backend-Server (1005) über ein erstes zelluläres digitales Telekommunikationsnetz (1011) mit der mobilen Telekommunikationsvorrichtung (1001) verbunden ist, wobei der Backend-Server (1005) über zumindest ein zweites Netz (1009) mit den mehreren elektronischen Vorrichtungen (1003A-N) verbunden ist;
- dem Backend-Server zumindest eine zweite Identifikationsadresse zugewiesen wird, wobei die zweite Identifikationsadresse eine Netzverbindung des zweiten Netzes mit dem Backend-Server (1005) definiert, wobei die Netzverbindung eine vertrauenswürdige Netzverbindung ist;
- für jede mobile Anwendung von den mehreren mobilen Anwendungen (1015A-N)
• von der mobilen Telekommunikationsvorrichtung (1001) vom Benutzer die Dienstanforderung empfangen wird;
• über ein drittes Netz ein Kommunikationskanal (1013A) zur elektronischen Vorrichtung (1003A) eingerichtet wird, um die Dienstanforderung von der mobilen Telekommunikationsvorrichtung (1001) an die elektronische Vorrichtung (1003A) weiterzuleiten;
• die Dienstanforderung durch die elektronische Vorrichtung (1003A) verarbeitet wird;
• die Antwort auf die Dienstanforderung unter Verwendung der zweiten Identifikationsadresse anstelle der ersten Benutzeridentifikationsadresse durch die elektronische Vorrichtung (1003A) zum Backend-Server umgeleitet wird;
- Antwortdaten, welche die empfangenen Antworten umfassen, in Verbindung mit einer Benutzer-ID des Benutzers durch den Backend-Server (1005) gespeichert werden;
- ein Web-Dienst (1017) zur Bereitstellung der Antwortdaten über eine URL durch den Backend-Server (1005) erzeugt wird;
- eine Demilitarized-Zone-, DMZ-Zwischenschicht (1007) zwischen dem Backend-Server (1005) und der mobilen Telekommunikationsvorrichtung (1001) bereitgestellt wird;
- der Web-Dienst (1017) in der DMZ-Zwischenschicht (1007) platziert wird;
- eine Datenzugriffsanforderung von der mobilen Telekommunikationsvorrichtung (1001) für einen Zugriff auf zumindest einen Teil der Antwortdaten durch den Backend-Server (1005) empfangen wird, wobei die Datenzugriffsanforderung die Benutzer-ID angibt;
- die mobile Telekommunikationsvorrichtung (1001) unter Verwendung von zumindest der Benutzer-ID authentifiziert wird;
- die URL durch den Backend-Server (1005) an die mobile Telekommunikationsvorrichtung (1001) gesendet wird, falls die Authentifizierung erfolgreich war;
- durch die mobile Telekommunikationsvorrichtung (1001) auf den Web-Dienst (1017) an der URL zugegriffen wird, um zumindest den Teil der Antwortdaten vom Backend-Server (1005) anzufordern;
- die Datenzugriffsanforderung für zumindest den Teil der Antwortdaten über die DMZ-Zwischenschicht (1007) durch den Background-Server (1005) empfangen wird;
- als Antwort auf die Datenzugriffsanforderung für zumindest den Teil der Antwortdaten durch die mobile Telekommunikationsvorrichtung Ergebnisdaten, die zumindest den Teil der Antwortdaten angeben, durch den Backend-Server (1005) an die mobile Telekommunikationsvorrichtung (1001) zu senden.

2. Verfahren nach Anspruch 1, wobei der Web-Dienst nach einer vorgegebenen Zeit seine Funktion einstellt.

3. Verfahren nach einem der vorangehenden Ansprüche, wobei das Umleiten der Antwort auf die Dienstanforderung umfasst:
- Erzeugen eines kryptographischen Schlüsselpaars durch die elektronische Vorrichtung, wobei das kryptographische Schlüsselpaar einen öffentlichen Kodierungsschlüssel und einen privaten Dekodierungsschlüssel umfasst;
- Kodieren der Antwort auf die Dienstanforderung in erste kodierte Daten durch die elektronische Vorrichtung unter Verwendung des öffentlichen Kodierungsschlüssels;
- Senden der ersten kodierten Daten als Antwort auf die Dienstanforderung;
- Senden des öffentlichen Kodierungsschlüssels und des privaten Dekodierungsschlüssels an den Backend-Server.

4. Verfahren nach Anspruch 3, ferner umfassend:
- Senden eines bestimmten privaten Kodierungsschlüssels von den mehreren privaten Kodierungsschlüsseln an die mobile Telekommunikationsvorrichtung durch die elektronische Vorrichtung;
- Erzeugen einer Signatur durch die mobile Telekommunikationsvorrichtung unter Verwendung des privaten Dekodierungsschlüssels, wobei die Datenzugriffsanforderung die Signatur angibt;
- Verifizieren der Signatur unter Verwendung der öffentlichen Dekodierungsschlüssel zur Authentifizierung der mobilen Telekommunikationsvorrichtung durch den Backend-Server.

5. Verfahren nach Anspruch 3 oder 4, ferner das Löschen der mehreren Antworten und der mehreren kryptographischen Schlüssel umfassend.

6. Verfahren nach einem der vorangehenden Ansprüche, wobei das dritte Netz ein Nahfeldkommunikations-, NFC-Netz umfasst, wobei sowohl die mobile Telekommunikationsvorrichtung als auch die mehreren elektronischen Vorrichtungen NFC-fähige Vorrichtungen sind.

7. Verfahren nach einem der vorangehenden Ansprüche, wobei die mobile Telekommunikationsvorrichtung eine batteriebetriebene Vorrichtung ist, wobei das Senden der Ergebnisdaten umfasst: Verarbeiten der Antwortdaten unter Verwendung der Datenzugriffsanforderung zur Erzeugung der Ergebnisdaten, wobei die Ergebnisdaten umfassen:
- Daten, die von elektronischen Vorrichtungen empfangen werden, deren geographischer Standort mit der Position der mobilen Telekommunikationsvorrichtung übereinstimmt; und/oder
- Daten, die innerhalb eines vordefinierten Zeitintervalls empfangen werden; und/oder
- Daten, die von elektronischen Vorrichtungen empfangen werden, bei denen es sich um vertrauenswürdige Systeme handelt.

8. Verfahren nach einem der vorangehenden Ansprüche, wobei die Antwort auf die Dienstanforderung ferner den geographischen Standort der elektronischen Vorrichtung angibt.

9. Verfahren nach einem der vorangehenden Ansprüche, wobei die vertrauenswürdige Netzverbindung eine sichere Hypertext-Übertragungsprotokoll (HTTP)-Verbindung umfasst.

10. Verfahren nach einem der vorangehenden Ansprüche, wobei der Web-Dienst als Dienst in einer Rechnerwolkenumgebung bereitgestellt wird, die den Backend-Server und die mehreren elektronischen Vorrichtungen als Komponenten eines verteilten Rechnersystems der Rechnerwolkenumgebung umfasst.

11. Computerprogrammprodukt, computerausführbare Befehle zur Durchführung der Verfahrensschritte des Verfahrens der vorangehenden Ansprüche umfassend.

12. Telekommunikationssystem, das eine mobile Telekommunikationsvorrichtung umfasst; wobei die mobile Telekommunikationsvorrichtung einen Prozessor und einen Speicher umfasst; wobei der Speicher mehrere mobile Anwendungen speichert, die vom Prozessor ausführbar sind; wobei jede mobile Anwendung von den mehreren mobilen Anwendungen Befehle beinhaltet, die, wenn sie ausgeführt werden, bewirken, dass sich der Prozessor mit einer entsprechenden elektronischen Vorrichtung des Telekommunikationssystems verbindet, um eine Dienstanfrage an die elektronische Vorrichtung zu stellen, wobei die elektronische Vorrichtung dafür ausgelegt ist, unter Verwendung einer ersten Benutzeridentifikationsadresse, die einem Benutzer der mobilen Vorrichtung zugewiesen ist, eine Antwort auf die Dienstanforderungen zu senden, wobei die elektronische Vorrichtung ein Terminal, einen Server oder einen Verkaufsautomaten umfasst; wobei das Telekommunikationssystem dazu dient, das Verfahren nach einem der vorangehenden Ansprüche 1-10 auszuführen.

13. Mobile Telekommunikationsvorrichtung des Telekommunikationssystems nach Anspruch 12, wobei die mobile Kommunikationsvorrichtung so gestaltet ist, dass sie: eine Dienstanforderung von einem Benutzer empfängt; über ein Netz einen Kommunikationskanal zu einer elektronischen Vorrichtung (1003A) einrichtet, um die Dienstanforderung an die elektronische Vorrichtung (1003A) weiterzuleiten; eine Datenzugriffsanforderung für einen Zugriff auf zumindest einen Teil von Antwortdaten, die auf einem Backend-Server (1005) gespeichert sind, zu senden, wobei die Datenzugriffsanforderung eine Benutzer-ID des Benutzers angibt; vom Backend-Server (1005) eine URL zu empfangen; an der URL Zugreifen auf einen Web-Dienst (1017) zuzugreifen, um zumindest den Teil der Antwortdaten vom Backend-Server (1005) anzufordern.

14. Backend-Server-Telekommunikationssystem nach Anspruch 12, wobei der Backend-Server für folgendes ausgelegt ist: Speichern von Antwortdaten, die empfangene Antworten von elektronischen Vorrichtungen umfassen, in Verbindung mit einer Benutzer-ID eines Benutzers einer mobilen Telekommunikationsvorrichtung, die mit dem Backend-Server (1005) verbunden ist; Erzeugen eines Web-Dienstes (1017) zur Bereitstellung der Antwortdaten über eine URL; Empfangen einer Datenzugriffsanfrage zum Zugreifen auf zumindest einen Teil der Antwortdaten (1005), wobei die Datenzugriffsanfrage die Benutzer-ID angibt; Authentifizieren der mobilen Telekommunikationsvorrichtung (1001) unter Verwendung von zumindest der Benutzer-ID; Senden der URL an die mobile Telekommunikationsvorrichtung (1001) (1005) im Falle einer erfolgreichen Authentifizierung; Empfangen der Datenzugriffsanfrage von zumindest dem Teil der Antwortdaten über eine DMZ-Schnittstelle (1007); Senden von Ergebnisdaten, die den letzten Teil der Antwortdaten angeben, an die mobile Telekommunikationsvorrichtung (1001) als Antwort auf die Datenzugangsanfrage von zumindest dem Teil der Antwortdaten durch die mobile Telekommunikationsvorrichtung.

15. Elektronische Vorrichtung des Telekommunikationssystems nach Anspruch 12, wobei die elektronische Vorrichtung so gestaltet ist, dass sie eine Dienstanfrage verarbeitet, die von einer mobilen Telekommunikationsvorrichtung empfangen wird; und die Antwort auf die Dienstanfrage unter Verwendung einer Identifikationsadresse eines Backend-Servers an den Backend-Server umleitet.

## Revendications

1. Procédé de télécommunication pour un accès sécurisé à des données utilisateur dans un système de télécommunication (1000), le système de télécommunication (1000) comprenant un dispositif mobile de télécommunication (1001) ; le dispositif mobile de télécommunication (800, 1001) comprenant un processeur (802) et une mémoire (804) ; où la mémoire stocke une pluralité d'applications mobiles (1015A-N) qui sont exécutables par le processeur, chacune des applications mobiles de la pluralité des applications mobiles (1015A-N) comprenant des instructions qui, quand elles sont exécutées, amènent le processeur à se connecter à un dispositif électronique correspondant (1003A-N) du système de télécommunication (1000) pour demander un service au dispositif électronique (1003A-N), le dispositif électronique comprenant un élément parmi un terminal, un serveur et un distributeur automatique, où le dispositif électronique est adapté pour envoyer une réponse à la demande de service en utilisant une première adresse d'identification de l'utilisateur attribuée à un utilisateur de l'application mobile ; le procédé comprenant :
- la mise en place d'un serveur dorsal (1005) du système de télécommunication (1000), où le serveur dorsal (1005) est connecté au dispositif mobile de télécommunication (1001) via un premier réseau de télécommunication numérique cellulaire (1011), le serveur dorsal (1005) étant connecté à la pluralité des dispositifs électroniques (1003A-N) via au moins un second réseau (1009) ;
- l'attribution au serveur dorsal (1005) d'au moins une seconde adresse d'identification, où la seconde adresse d'identification définit une connexion réseau du second réseau vers le serveur dorsal (1005), où la connexion réseau est une connexion réseau sécurisée ;
- pour chacune des applications mobiles de la pluralité des applications mobiles (1015A-N),
• la réception par le dispositif mobile de télécommunication (1001) en provenance de l'utilisateur de la demande de service ;
• l'établissement d'un canal de communication (1013A) via un troisième réseau vers le dispositif électronique (1003A) pour réacheminer la demande de service par le dispositif mobile de télécommunication vers le dispositif électronique (1003A) ;
• le traitement de la demande de service par le dispositif électronique (1003A) ;
• le réacheminement vers le serveur dorsal de la réponse à la demande de service en utilisant la seconde adresse d'identification à la place de la première adresse d'identification de l'utilisateur par le dispositif électronique (1003A) ;
- le stockage des données de la réponse comprenant les réponses reçues associées à une ID utilisateur de l'utilisateur par le serveur dorsal (1005) ;
- la génération d'un service web (1017) pour fournir les données de la réponse via un URL par le serveur dorsal (1005) ;
- la mise à disposition d'une zone démilitarisée, DMZ, interface (1007) entre le serveur dorsal (1005) et le dispositif mobile de télécommunication (1001) ;
- la mise en place du service web (1017) dans l'interface DMZ (1007) ; ;
- la réception en provenance du dispositif mobile de télécommunication (1001) d'une demande d'accès aux données pour accéder au moins à une partie des données de la réponse par le serveur dorsal (1005), où la demande d'accès aux données est spécifique à l'ID utilisateur ;
- l'authentification du dispositif mobile de télécommunication (1001) en utilisant au moins l'ID utilisateur ;
- l'envoi de l'URL au dispositif mobile de télécommunication (1001) par le serveur dorsal (1005) dans le cas d'une authentification réussie ;
- l'accès au service web (1017) par son URL pour demander l'au moins partie des données de la réponse en provenance du serveur dorsal (1005) par le dispositif mobile de télécommunication (1001) ;
- la réception de la demande d'accès aux données de l'au moins une partie des données de la réponse via l'interface DMZ (1007) par le serveur dorsal (1005) ;
- l'envoi de données relatives au résultat de l'au moins une partie des données de la réponse vers le dispositif mobile de télécommunication (1001) par le serveur dorsal (1005) en réponse à la demande d'accès aux données de l'au moins une partie des données de la réponse par le dispositif mobile de télécommunication.

2. Procédé selon la revendication 1, dans lequel le service web devient inopérant après une durée prédéterminée.

3. Procédé selon l'une quelconque des revendications précédentes, dans lequel le réacheminement de la réponse à la demande de service comprend :
- la création d'une paire de clés cryptographiques par le dispositif électronique, où la paire de clés cryptographiques comprend une clé publique de cryptage et une clé privée de décryptage ;
- le cryptage de la réponse à la demande de service en utilisant la clé publique de cryptage pour les premières données cryptées par le dispositif électronique ;
- l'envoi des premières données cryptées en tant que réponse à la demande de service ;
- l'envoi de la clé publique de cryptage et de la clé privée de décryptage au serveur dorsal.

4. Procédé selon la revendication 3, comprenant en outre :
- l'envoi d'une clé privée de décryptage donnée de la pluralité des clés privées de décryptage au dispositif mobile de télécommunication par le dispositif électronique ;
- la création d'une signature en utilisant la clé privée de décryptage par le dispositif mobile de télécommunication, où la demande d'accès aux données est spécifique à la signature ;
- la vérification de la signature en utilisant les clés publiques de cryptage pour l'authentification du dispositif mobile de télécommunication par le serveur dorsal.

5. Procédé selon les revendications 3 ou 4, comprenant en outre la suppression de la pluralité des réponses et de la pluralité des clés cryptographiques.

6. Procédé selon l'une quelconque des revendications précédentes, dans lequel le troisième réseau comprend une communication en champ proche, un réseau NFC, où chacun des dispositifs mobiles de télécommunication et de la pluralité des dispositifs électroniques est un dispositif NFC actif.

7. Procédé selon l'une quelconque des revendications précédentes, dans lequel le dispositif mobile de télécommunication est un dispositif alimenté par batterie, l'envoi des données du résultat comprenant : le traitement des données de la réponse en utilisant la demande d'accès aux données pour générer les données du résultat, où les données du résultat comprennent au moins l'une des données :
- données reçues en provenance des dispositifs électroniques ayant une position géographique qui correspond à la position du dispositif mobile de télécommunication ;
- données qui sont reçues dans un intervalle de temps prédéfini ;
- données reçues en provenance de dispositifs électroniques qui sont des systèmes fiables.

8. Procédé selon l'une quelconque des revendications précédentes, dans lequel la réponse à la demande de service indique en outre la position géographique du dispositif électronique.

9. Procédé selon l'une quelconque des revendications précédentes, dans lequel la connexion au réseau fiable comprend une connexion par Protocole de Transfert Hyper Texte (HTTP) sécurisée.

10. Procédé selon l'une quelconque des revendications précédentes, dans lequel le service web est mis à disposition en tant que service dans un environnement d'informatique en nuage comprenant le serveur dorsal et la pluralité des dispositifs électroniques en tant que composants d'un système informatique distribué de l'environnement de l'informatique en nuage.

11. Produit de programme informatique comprenant des instructions exécutables par ordinateur pour réaliser les étapes de procédé du procédé selon les revendications précédentes.

12. Système de télécommunication comprenant un dispositif mobile de télécommunication ; le dispositif mobile de télécommunication comprenant un processeur et une mémoire ; où la mémoire stocke une pluralité d'applications mobiles qui sont exécutables par le processeur ; chaque application mobile de la pluralité des applications mobiles comprenant des instructions qui, quand elles sont exécutées, amènent le processeur à se connecter à un dispositif électronique correspondant du système de télécommunication pour demander un service au dispositif électronique, où le service électronique est adapté pour envoyer une réponse à la demande de service en utilisant une première adresse d'identification d'utilisateur qui est attribuée à un utilisateur de l'application mobile, le dispositif électronique comprenant un élément parmi un terminal, un serveur et un distributeur automatique ; où le système de communication est exploitable pour exécuter le procédé selon l'une des revendications 1 à 10 précédentes.

13. Dispositif mobile de télécommunication du système de communication selon la revendication 12, dans lequel le dispositif mobile de télécommunication est configuré pour :
recevoir de la part d'un utilisateur une demande de service, établir un canal de communication via un réseau vers un dispositif électronique (1003A) pour réacheminer la demande de service vers le dispositif électronique (1003A) ; envoyer une demande d'accès aux données pour accéder à l'au moins une partie des données de la réponse stockée dans un serveur dorsal (1005), où la demande d'accès aux données est spécifique d'une ID d'utilisateur de l'utilisateur ; recevoir un URL en provenance du serveur dorsal (1005) ; accéder au service web (1017) par l'URL pour demander l'au moins une partie des données de la réponse en provenance du serveur dorsal (1005).

14. Serveur dorsal du système de télécommunication selon la revendication 12, dans lequel le serveur dorsal est configuré pour : stocker les données de la réponse comprenant des réponses reçues en provenance de dispositifs électroniques associés avec une ID d'utilisateur d'un utilisateur du dispositif mobile de télécommunication qui est connecté au serveur dorsal (1005) ; générer un service web (1017) pour :
mettre à disposition des données de la réponse via un URL ; recevoir en provenance du dispositif mobile de télécommunication (1001) une demande d'accès aux données pour accéder à l'au moins une partie des données de la réponse (1005), où la demande d'accès aux données est spécifique à l'ID d'utilisateur ; authentifier le dispositif mobile de télécommunication (1001) en utilisant au moins l'ID d'utilisateur ; envoyer l'URL vers le dispositif mobile de télécommunication (1001) (1005) dans le cas d'une authentification réussie, recevoir la demande d'accès aux données de l'au moins une partie des données de la réponse via une interface DMZ (1007) ; envoyer des données du résultat spécifique de l'au moins une partie des données de la réponse vers le dispositif mobile de télécommunication (1001) en réponse à la demande d'accès aux données de l'au moins une partie des données de la réponse par le dispositif mobile de télécommunication.

15. Dispositif électronique du système de télécommunication selon la revendication 12, dans lequel le dispositif électronique est configuré pour traiter une demande de service reçue en provenance d'un dispositif mobile de télécommunication, et réacheminer la réponse à la demande de service vers un serveur dorsal en utilisant une adresse d'identification du serveur dorsal.
